# EUROPÄISCHE PATENTSCHRIFT

(11) **EP 2 183 315 B1**
(45) Veröffentlichungstag und Bekanntmachung des Hinweises auf die Patenterteilung: **18.01.2017**
(21) Anmeldenummer: 08785477.4
(22) Anmeldetag: 09.08.2008
(51) Int. Cl.: C08L 11/02, C09J 111/02, C08K 3/36

(54) **NIEDRIGVISKOSE WÄSSRIGE KLEBSTOFF-POLYMER-DISPERSIONEN FÜR NASS-IN-NASS VERKLEBUNG VON SCHAUMSTOFFEN**
LOW-VISCOSITY AQUEOUS ADHESIVE POLYMER DISPERSIONS FOR THE WET-ON-WET ADHESION OF FOAMS
DISPERSIONS DE POLYMÈRES ADHÉSIVES AQUEUSES À FAIBLE VISCOSITÉ POUR L'ADHÉSION "ALLA PRIMA" DES MOUSSES.

(30) Priorität: 24.08.2007 DE 102007040277; 14.02.2008 DE 102008009390
(43) Veröffentlichungstag der Anmeldung: 12.05.2010
(73) Patentinhaber: Covestro Deutschland AG, 51373 Leverkusen (DE)
(72) Erfinder: ACHTEN, Dirk, 51375 Leverkusen (DE); KUEKER, Peter, 51465 Bergisch Gladbach (DE); KEMPKES, Juergen, 51069 Köln (DE); LORENZ, Bianka, 41539 Dormagen (DE); REICHERT, Peter, 41541 Dormagen (DE); JESKE, Winfried, 51399 Burscheid (DE); COLINAS-MARTINEZ, Jose, 42929 Wermelskirchen (DE)
(74) Vertreter: Levpat
(86) Internationale Anmeldenummer: PCT/EP2008/006594
(87) Internationale Veröffentlichungsnummer: WO 2009/027013

(56) Entgegenhaltungen:
- EP-A- 1 624 018
- EP-A- 1 652 879
- WO-A-2004/106422
- WO-A-2008/037704
- US-B1- 6 440 259

## Beschreibung

Die Erfindung betrifft ein Verfahren zur Herstellung einer nass-in-nass Verklebung von Schaumstoffen, das eine niedrigviskose, monomerarme wässrige Polymer-Dispersionen auf Basis von Polychloropren verwendet.

Gebräuchliche Kontaktklebstoffe des Standes der Technik auf Basis von Polychloropren, Styrolbutadien-Styrol-Blockcopolymeren oder Polyurethanen sind überwiegend lösemittelhaltige Klebstoffe, die auf beide zu verbindenden Substrate aufgebracht und getrocknet werden. Nach Ablüften und anschließendem Fügen beider Substrate unter Druck erhält man einen Verbindungsaufbau mit hoher Anfangsfestigkeit unmittelbar nach dem Fügevorgang. Bei Bedarf erhöhen nachfolgende weitere physikalische und/oder chemische Vernetzungsreaktionen die Fügefestigkeit. Die so eingesetzten marktüblichen Klebstoffformulierungen haben Feststoffkonzentrationen an organischen Komponenten bestehend aus Polymeren, Harzen, Weichmachern, Alterungsschutzmitteln und weiteren üblichen Formulierungshilfsstoffen von 10 bis 25 Gew.%, anorganische Bestandteile wie Salze und Füllstoffe von 0 bis 25 Gew.% und Lösungsmittelkomponenten von 65 bis 90 Gew.%.

Aus ökologischen, ökonomischen sowie Arbeitssicherheits- und Hygiene- Gründen besteht ein wachsender Bedarf an geeigneten wässrigen Dispersionen, die sich zu entsprechenden lösungsmittelfreien Klebstoffformulierungen verarbeiten lassen.

Stand der Technik sind lösungsmittelfreie Kontaktklebstoffformulierungen auf Basis von Polychloropren- und bedingt Naturkautschuk-Latex. Beide zeichnen sich dadurch aus, dass sie - in analoger Weise zu lösungsmittelhaltigen Kontaktklebstoffen - typischerweise auf beide Seiten des Substrates aufgetragen werden. Nach einer für jede Formulierungen spezifischen minimalen Trocknungs- beziehungsweise Ablüftungszeit, bei der überschüssiges Wasser verdunstet/verdampft, werden die Substrate gefügt beziehungsweise verpresst, wobei der Klebstofffilm unter Druck bzw. Scherung kristallisiert und auf diese Weise eine hohe Anfangsfestigkeit erzeugt wird. Im Anschluss können analog zu den lösemittelhaltigen Kontaktklebstoffen weitere chemische und/oder physikalische Prozesse für eine Verbesserung der Fügefestigkeit herangezogen werden. Gebräuchliche Varianten sind hier zum Beispiel eine Nachvernetzung über blockierte oder latent reaktive Isocyanate sowie der Einsatz von geeigneten Harzen als Formulierungsbestandteile.

Als Nachteil der lösemittelfreien wässrigen Kontaktklebstoffformulierungen im Vergleich zu lösungsmittelhaltigen Kontaktklebstoffen wird häufig die längere Zeitspanne genannt, die notwendig ist, um durch Verdampfen/Verdunsten des Wassers eine für Filmbildung ausreichende Konzentration des Feststoffanteils auf den Fügeteil-Oberflächen zu erreichen. Eine hohe Ausgangsfeststoffkonzentration verringert die Zeit bis zur Filmbildung der Klebstoffdispersion auf den Fügeteilen und damit die Wartezeit bis zu einer erfolgreichen Verklebung durch Kontaktierung der Fügeteile.

Als ein weiterer Nachteil wird die im Vergleich zu lösungsmittelhaltigen Systemen geringere Anfangsfestigkeit unmittelbar nach dem Fügevorgang auf Grund von im Klebstofffilm eingeschlossenem Wasser genannt.

Der Stand der Technik empfiehlt zur Lösung dieser Probleme wässrige Klebstoffformulierungen auf einen möglichst hohen Feststoffgehalt einzustellen. Entsprechend sind für den Einsatz als Kontaktklebstoffe möglichst hohe Feststoffkonzentrationen in den eingesetzten Polychloropren Latices erwünscht. Aus diesem Grund sind für Klebstoffanwendungen ausgewiesene Polychloroprenlatices nur mit Feststoffkonzentration von größer 40 Gew.% auf dem Markt verfügbar. Die mögliche Feststoffkonzentration ist rein physikalisch durch die dichteste Teilchenpackung der Latices limitiert. Gebräuchliche Polychloropren-Latices haben Feststoff(Polychloropren)-anteile im Bereich von 50 bis 60 Gew.%.

Ein wünschenswertes Nass-in-Nass Kleben, welches als direktes Fügen und Kleben nach Auftrag der wässrigen Klebstoffformulierung definiert wird, kann durch Auftrag des Klebstoffs nach einem 1- oder 2- Komponentenverfahren erreicht werden. Dabei werden erfolgreich möglichst hoch konzentrierte Latices (Festoffgehalt > 50 Gew.%) eingesetzt.

Bei einem 1-Komponentenverfahren wird die Klebstoffformulierung durch zusätzliche Destabilisierung des Latex mit Elektrolyten und/oder pH-Wert Erniedrigung so eingestellt, dass sie direkt nach Auftragung auf das Substrat bricht (Film bildet) und verpresst beziehungsweise verklebt werden kann.

Zu diesem Zweck werden im Stand der Technik vorzugsweise anionische, über Harzsäuren oder disproportionierte Harzsäuren stabilisierte Polychloroprenlatices mit Hilfe von einwertigen und/oder zweiwertigen anorganischen Salzen wie beispielsweise KCl, NaCl, ZnCl₂, MgCl₂, ZnO, MgO und/oder durch anorganische und/oder organischen Säuren wie beispielsweise HCl, Borsäure, Phosphorsäure, Hydrogencarbonat bzw. Essigsäure, Glycin, andere Aminosäuren, Weinsäure, Zitronensäure, beziehungsweise deren Alkali- und Erdalkalisalze bis zu einem Punkt destabilisiert, wo sie unter Scherung oder Druck direkt brechen, Film bilden und unter Druck verklebt werden können.

Wie in der US-A 2003/221778 beschrieben werden erhöhte Anfangsfestigkeiten durch Auswahl schnell kristallisierender Latices und/oder durch Einsatz von bis zu 30 Teilen kolloidal gelösten Silica in Kombination mit Polychloropren-Latex erreicht Darüber hinaus können noch vielfältige andere Formulierungsbestandteile wie Harze, Polyurethan-, Acrylat- und SBR-Latices, organische Lösungsmittel sowie zusätzliche Oxidationsstabilisatoren, Fungizide, Bakterizide, ionische und nicht ionische Tenside, weiter Füllstoffe und gebräuchliche Formulierungsbestandteile für wässrige Dispersionen Formulierungsbestandteile sein.

Bei Feststoffkonzentrationen der Klebstoffformulierungen von größer 45 Gew.% handelt es sich um reaktive und hochviskose Formulierungen. Folglich erfolgt die Nass-in-Nass Klebung, schneller, jedoch mit dem Nachteil einer schlechteren Lager/HCl- und Scherstabilität der Formulierungen.

In der WO 01/34718 werden Feststoffkonzentrationen unter 35 Gew.% offenbart. Diese Polychloropren-Latices enthalten jedoch Acrylsäureester oder Ethylvinylacetat oder Kolophoniumharzdispersionen in Kombination mit Borsäure oder Aminosäure oder organischer Säure.

Stand der Technik ist weiterhin die Formulierung von Klebstoffen, die nach dem 2-Komponenten-Verfahren appliziert werden können. Diese Klebstoffe setzen sich üblicherweise zusammen aus einem anionisch stabilisierten Polychloropren-Latex und einer Aktivierungskomponente. Durch die Auslagerung der Aktivierungskomponente wird zum einen eine hohe Lagerstabilität der formulierten Polychloropren-Latex Komponente und zum anderen eine hohe Reaktivität (schnelles Brechen der Klebstoffformulierung nach Applikation auf die Substrate) und im Ergebnis hervorragende Nass-in-Nass Klebeeigenschaften nach Vereinigung der Komponenten erreicht. Als Ausführungsvariante dieses Verfahrens besteht die Möglichkeit eines Auftrags des Klebstoffs auf die Fügeteile im "Spray-mix"-Verfahren. Bei diesem Verfahren wird der Klebstoff sowie ein Koagulationsmittel separat in einer Sprühpistole gefördert, im Sprühstrahl gemischt und noch im Flug und/oder auf dem Fügeteil koaguliert. Die Viskosität der Latexkomponente wird hierbei wie typischerweise bei Applikation von Kontaktklebstoffen mittels Sprühverfahren auf Viskositäten zwischen 200-3000 mPas eingestellt. Als Aktivierungskomponente können dabei konzentrierte wässrige Lösungen von Alkalimetall- und/oder Erdalkalimetallionen und/oder z.B. dreiwertige Aluminiumionen und/oder anorganische/organische Säuren dienen.

Nachteile dieses Verfahrens sind der hohe apparative Aufwand, der fehleranfällige Mischprozess sowie die typischerweise hohen Ionenkonzentrationen in den resultierenden Klebstoffen, die zu erhöhter Gleichgewichtswasserquellung oder - im Fall des Einsatzes von Säuren - bei der Einstellung von niedrigen pH-Werten zu Korrosion in Zusammenhang mit metallischen Substraten führen können. Das Verfahren ist vergleichsweise zeit- und kostenintensiv und deshalb aus ökonomischer Sicht unbefriedigend.

Alle anionischen, mit Harzsäuren (oder deren Derivaten wie zum Beispiel disproportionierte Harzsäuren oder spezielle Harzsäure-Destillationsschnitte) stabilisierten, kommerziell verfügbaren Polychloropren-Dispersionen spalten im Laufe der spezifizierten Lagerzeit in signifikanten Mengen HCl ab. Diese Zusatzbelastung führt bei fertig formulierten, reaktiven 1-Komponenten Klebstoff-formulierungen zu einer zusätzlichen Begrenzung der Lagerstabilität, weil der sinkende pH-Wert die Formulierung zusätzlich destabilisiert.

Dieses Problem sowie daraus resultierende mögliche Verfärbungen der gealterten Klebstoffformulierungen und/oder des applizierten Klebstoffes sowie ein möglicher Säure-Angriff der freiwerdenden HCl auf eventuell pH-empfindliche Substrate wird üblicherweise durch Zugabe von zweiwertigen vordispergierten Metalloxiden (ZnO, MgO, CaO), zum Teil als Nanoteilchen vorliegend, und/oder aminischen Säurefängern wie Hydroxylamin, Ethanolamin bzw. Kodensationsprodukte und Derivaten davon gelöst (WO A1 2004/106422). Weiterhin werden Alterungsschutzmittel gegen oxidative Alterung zugesetzt.

Der Einsatz von mehrwertigen Metalloxiden wie MgO und CaO ist in anionischen mit Harzsäuren stabilisierten Polychloroprendispersionen nicht wünschenswert, weil der Latex destabilisiert wird. Höhere Konzentrationen als 0,24 % ZnO sind in verschiedenen Länder kennzeichnungspflichtig und erschweren erheblich die Herstellung von stabilen Klebstoffformulierungen mit einem pH-Wert kleiner 10 aufgrund ihres amphoteren Charakters.

Typischerweise zeigen solche Formulierungen nur eine kurze Lagerstabilität, besonders bei niedrigviskosen Formulierungen aufgrund von Koagulation. Höher viskose zum Beispiel pastöse Formulierungen erleichtern dagegen die Formulierung lagerstabiler Systeme, allerdings sind größere Viskositätsänderungen über die Lagerzeit weiterhin typisch (Anstieg mit Faktor >2). Beide Varianten, eine Stabilisierung über Ionen wie auch über die genannten aminischen Stabilisatoren, sind nicht vorteilhaft für die Wasserquellung sowie Ökobilanz. So ist zum Beispiel ZnO in Konzentrationen von größer 0,24 Gew.% als umweltschädlich eingestuft und alle flüchtigen organischen Bestandteile erhöhen die TVOC (TotalVolatileOrganicConcentration)Werte einer Formulierung und limitieren damit den Einsatz in Applikationen mit strengen Umwelt oder Fogging-Auflagen.

Um die Klebeigenschaften sowie Applikationseigenschaften (Filmbildung) mittels Pinsel, Walze oder im Sprühverfahren noch weiter zu verbessern, werden Kontaktklebstoffformulierungen häufig auf Viskositäten von 200-3000 mPas für die Spritzapplikation sowie auf 1000-10000 mPas für Streich- oder Walzenapplikation eingestellt. Dies erfolgt üblicherweise mittels gebräuchlicher Verdicker wie wasserlösliche Polyurethane, Polyacrylsäuren, Polyole, Cellulose/Stärke/Zuckerderivate oder Polyacrylamide. Im Falle von kolloidal gelösten bzw. suspensierten Silicas erfolgt dies mittels ein/zweiwertigen Ionen meistens auf Basis von ZnO sowie durch pH-Wert Einstellung der Formulierungen auf einen Wert im Übergangsbereich der kolloidalen Stabilität der wässrigen Silica Lösung/Suspension (US-A 2003/221778). Da die Viskosität von derart verdickten Klebstoffformulierungen extrem pH-Wert abhängig ist, ist eine Langzeit-Viskositätsstabilität aufgrund der fortschreitenden HCl-Abspaltung am Polychloropren praktisch nicht erreichbar.

Ein gravierender Nachteil der so eingestellten viskosen und destabilisierten bzw. aktivierten Formulierungen ist wiederum die häufig mangelhafte Lager-, Viskositäts- und Scherstabilität, die leicht zu Hautbildung auf der Klebstoffoberfläche sowie zu regelmäßigen Ausscheidungen, Stippen und Verklumpungen in den angesetzten Klebstoffformulierungen durch Scherung in Transport und Applikation führt. Weiter sind die ökologischen Probleme beim Gebrauch von z.B. größeren Konzentrationen (bis 5 Gew%) an ZnO oder Borsäure, wie in EP-A 0 624 634 und Gesundheitliche Bewertung Nr. 005/2006 des BfR vom 16. November 2005 beschrieben, zu beachten.

Weiterhin sorgt der hohe Feststoffanteil von ca. 50 Gew.% bei wässrigen Kontaktklebstoffformulierungen im Vergleich zu verdünnten Lösungsmittel-basierten Kontaktklebstoffen mit ca. 15 Gew.% Feststoffanteil zu unnötig dicke Applikationsschichten des Klebstoffs. Dieser Umstand beeinflusst unter Umständen sowohl die Klebstoffeigenschaften des Verfahrens negativ, wie auch die ökonomischen Kenndaten (Materialverbrauch) der Klebung.

Der Auftrag der Klebstoffformulierung mittels Sprühverfahren ist eine bevorzugte Methode zur gezielten dünnen Applikation von Kontaktklebstoffen auf Substratoberflächen zum Beispiel zur Schaum-Schaumverklebung in der Möbel- und Matratzenindustrie sowie zur gleichmäßigen industriellen Benetzung von Oberflächen bei der Kaschierung in der Automobilindustrie sowie Gewebe- und Lederverklebung. Hierbei gibt es immer wieder Probleme mit dem so genanntem "Overspray" Damit ist eine Benetzung mit Klebstoffformulierung jenseits des Zielbereiches sowie ein Ablaufen von überschüssigem Sprühmittel von der Substrat-Probe gemeint.

"Overspray" ist eine komplexes Phänomen, welches zum Teil durch eine zu niedrige Viskosität der Formulierung mit Bezug auf die Applikationsbedingungen - zu nennen sind hier beispielhaft Düsengeometrien und Druckverhältnissen - verursacht wird.

Diese niedrige Viskosität entsteht zum Teil durch die Diskrepanz zwischen Ansatzviskosität, gemessen mittels Brookfield Rheometer bei 12 oder 30 oder 60 Umdrehungen/min bei Raumtemperatur, und der Viskosität unter extremer Scherbelastung, wie sie in gebräuchlichen Sprühaggregaten vorkommt. Eine Auswahl der geeigneten Sprühbedingungen ist bei strukturviskosen oder thixotropen Flüssigkeiten ohne aufwendige Messverfahren der scherabhängigen Viskosität und im Besonderen auch Latex-Stabilität auf diese Weise bestenfalls empirisch. Entsprechend ist die Sprühergebnisqualität häufig mangelhaft und die Overspray Menge typischerweise erheblich. Häufig kommt es in diesem Zusammenhang auch zu wiederholten Störungen durch Verstopfungen/ Verklebungen des Sprühkopfs aufgrund der mangelhafter Scherstabilität marktüblicher Formulierungen (Technology for Waterborne Coatings ACS Symposium Series 663 1997 Chapter 15).

Aus dem Stand der Technik ist der Einsatz von Kieselsäure-Produkten für unterschiedliche Anwendungen bekannt. Während feste SiO₂-Produkte vielfach zur Steuerung rheologischer Eigenschaften, als Füllstoffe oder Adsorbentien eingesetzt werden, dominiert bei Kieselsolen die Anwendung als Bindemittel diverser anorganischer Materialien, als Poliermittel von Halbleitern oder als Flockungspartner in kolloidchemischen Reaktionen. Beispielsweise wird in der EP-A 0 332 928 der Einsatz von Polychloropren-Latices in Gegenwart von Kieselsolen als Imprägnierschicht bei der Herstellung von Brandschutzelementen offenbart.

In der US-A 2003/221778 wird weiterhin der Einsatz von Kieselsäure/Wasserglas-Suspensionen zur Verbesserung der Nassklebrigkeit und Initialfestigkeit sowie Endfestigkeit von Polychloropren Kontaktklebstofftormulierungen beschrieben. Außerdem werden über Kieselsäure-Suspensionen mit Hilfe von pH-Wert und ein und/oder zweiwertigen Ionen gezielt Viskositäten eingestellt. Die in der US-A 2003/221778 offenbarten Kieselsäuren sind sowohl empfindlich gegenüber niedrigem pH (< 9) als auch hohen Konzentrationen an zweiwertigen Ionen/Metalloxiden (ZnO, MgO). Eine stabile Formulierung bezüglich Viskosität und/oder Latexstabilität auf Basis von Polychloropren Latex beinhaltend kolloidal gelöste Kieselsäuren bei einem pH-Wert < 9,5 in Kombination mit typischen ZnO-Konzentrationen zur Einstellung der Viskosität und HCl- bzw. pH-Stabilität sind nur im Zusammenhang mit zusätzlichen Hilfsemulgatoren und/oder stabilisierenden Acrylatdispersionen bekannt (Firmenschrift: Sales Aid-1Component Spray Adhesives based on Dispercoll^{®}C, Bayer Material Science Jun. 2007).

Nach Stand der Technik ist der Einsatz dieser anorganischen Füllstoffe bis ca. 30 Gew.-Teile, bezogen auf den Gehalt Feststoff im Polychloropren-Latex, vorteilhaft. Bei höheren Konzentrationen sinkt neben Start und Endfestigkeit im 180° Peeltest in Kombination mit ZnO und bei pH-Wert <10 die Langzeitstabilität der Formulierungen. Bei höheren Konzentrationen von Kieselsolen entfällt darüber hinaus die Möglichkeit der stabilen Viskositätseinstellung mittels gebräuchlicher Verdicker oder ZnO-Zusätze. Eine Vorteilhaftigkeit wie beschrieben zum Einsatz als typischer verstärkender Füllstoff sowie Rheologiehilfsmittel ist damit bei Konzentrationen ab ca. 20 Gew.% schon nicht mehr gegeben.

Der Begriff hohe Anfangsfestigkeit ist eng mit der Definition eines Kontaktklebstoffes verknüpft. Kontaktklebstoffe können grundsätzlich bei Umgebungstemperatur auf Substrate mit Umgebungstemperatur aufgetragen werden. Unter einer ausreichend hohen Anfangsfestigkeit ist eine Festigkeit zu verstehen, die zur Weiterverarbeitung von Fügeteilen ausreichend hoch ist, damit ein Verrutschen der gefügten Teile im folgenden Verarbeitungsprozess vermieden wird, bzw. wobei die verklebten Substrate eine Festigkeit unterhalb der Adhäsions- und Kohäsionsfestigkeit der Klebstoffschicht aufweisen, so dass in der Regel bei Belastung des gefügten Objektes das Fügeteil vor der Klebstoffschicht zerstört wird.

Als Kontaktklebstoffe werden fälschlicherweise häufig auch Haftklebstoffe bezeichnet. Diese unterscheiden sich aber physikalisch dadurch, dass keine sofort einsetzende Kristallisation in der Klebstoffschicht im Fügungsprozess erfolgt, weshalb solche Bindungen grundsätzlich unter Last kriechen. Typische Beispiele dafür sind amorphe Polyacrcylat- und Polyurethandispersionen, Formulierungen mit einem Glasübergangspunkt der amorphen Polymermatrix unterhalb der Applikationstemperatur. Nachteilig ist hier der angesprochene Kriechprozess, der keine dauerhafte Fügung unter Last mit Hilfe solcher Produkte zulässt und häufig nicht die geforderten Anfangsfestigkeiten erreicht.

Ein anderes Beispiel für falsch zitierte Kontaktklebstoffe sind hitzeaktivierbare Systeme z.B. sogenannte Hotmelts, die heiß appliziert werden müssen, sofort gefügt und auf der kalten Fügeteiloberfläche durch Kristallisation oder Abkühlen unterhalb des Glasübergangspunktes verfestigen. Nachteilig ist hier der notwendige Einsatz zum Teil hochschmelzender Systeme mit einem Tg / Tm größer als 80°C, um eine ausreichende Temperaturbeständigkeit zu gewährleisten. Der Einsatz hoher Temperaturen ist bei empfindlichen Substraten häufig problematisch. Weiter ist der Benutzer gegen die hohen Einsatztemperaturen zu schützen. Eine großflächige Applikation des Klebstoffs mittels Sprühsystemen ist aufgrund der schnellen Verfestigung der Kohäsionsschicht problematisch. Hotmelt basierende Klebstoffformulierungen sind darüber hinaus nach Aushärtung typischerweise hart und spröde. Daraus leitet sich ein Mangel beim Einsatz in Komfortsystemen wie Möbel und Mattratzen ab. Eine ausreichend lange offene Zeit, die einen flexiblen Fügungsprozess auch bei komplexen unterschiedliche Zeit beanspruchenden Arbeitsprozessen sowie ein mögliches Repositionieren der verklebten Elemente zulässt, ist ebenfalls nicht oder nur unzureichend gegeben.

Stand der Technik sind außerdem Polyurethan-basierende Klebstoffdispersionen, die zuerst auf der Substratoberfläche abtrocknen und einen Film ausbilden müssen, bevor sie nach Hitzeaktivierung zusammengefügt werden können. Analog funktionieren auch latentreaktive Filme /Folien, welche auf das Substrat gelegt, hitzeaktiviert und dann über Verpressen appliziert werden können. Nachteilig ist bei den Polyurethan basierten Produkten die mangelnde Nass-in-Nass Klebfestigkeit, sowie die ausgeschlossene Applikation auf senkrechten Flächen, da eine Festigkeit erst nach Filmbildung und Aktivierung erreicht wird.

Aufgabe der vorliegenden Erfindung bestand somit in der Bereitstellung von ökologisch und ökonomisch vorteilhaften alterungs-, lagerungs- und scherstabilen wässrigen Klebstoffzusammensetzungen, die nach der Applikation auf den zu verklebenden Substraten nach kurzer Zeit (Wartezeit < 5 min) ein Fügen Nass-in-Nass bei ausreichend hoher Anfangsfestigkeit (Nassfestigkeit), insbesondere in noch feuchtem Zustand auch ohne vorhergehende Filmbildung, ermöglichen.

Überraschenderweise wurde nun gefunden, dass eine Polymerdispersion, die eine bestimmte Konzentration an Polychloropren und einen Restmonomergehalt von < 50 ppm aufweist die oben beschriebenen Nachteile überwindet und das erfindungsgemäße Verfahren ermöglicht. Trotz einer extrem niedrigen Viskosität neigt die erfingdungsgemäß einsetzbare Polymerdispersion in der Sprühapplikation nicht zu Overspray. Die Polymerdispersionen zeigen nur einen extrem geringen Eigengeruch und die resultierenden Klebstoffzusammensetzungen weisen eine hervorragende Temperatur-, pH-, Lager- und Scherstabilität auf. Weiter zeigen die Polymerdispersionen eine im Vergleich sehr niedrige Tendenz zur Verschmutzung und Verstopfung der Sprühapplikatoren aufgrund ihrer niedrigen Konzentration, Viskosität und extremen Scherbeständigkeit.

Die Polymerdispersionen/Klebstoffformulierungen zeichnen sich weiter trotz des Verzichts auf potentiell umweltgefährdende Säurefänger wie ZnO durch eine hervorragende pH-Stabilität gegenüber HCl sowie ausgezeichnete Alterungsstabilität aus.

Es war ebenfalls überraschend, dass bei Zugabe von Kieselsäure-Suspension zu den erfindungsgemäß einsetzbaren Polymerdispersionen die Viskosität der Formulierung mit Zugabe der Kieselsäure-Suspension abnimmt. Eine wesentliche vorbeschriebene Eigenschaft dieser Produkte ist dagegen die Wirkung als Verdicker in herkömmlichen Klebstoffformulierungen (US-A 2003/221778).

Die resultierenden Klebstoffzusammensetzungen lassen sich mit vergleichbar niedriger Schichtdicke auf Substrate aufbringen, was neben ökonomischen Vorteilen auch Vorteile bezüglich Gesundheitsgefährdung, Brennbarkeit und Arbeitshygiene mit sich bringt. Aufgrund der geringen Klebstoffschichtdicken, sowie des typischerweise nicht deckenden zum Teil nur tröpfchenförmigen Klebstoffauftrags besteht eine hervorragende Luft und Wasserdampf-Durchlässigkeit, wie sie im Möbel und Polsterbereich aus hygienischen Gründen (Pilz und Bakterienbefall/Wachstum vorbeugend) dringend erwünscht ist.

Gegenstand der vorliegenden Erfindung ist Verfahren zur Herstellung einer Nass-in-Nass Verklebung von Schaumstoffen, das dadurch gekennzeichnet ist, dass eine wässrige Polymerdispersion mittels Sprühauftrag, Pinsel- oder Walzenauftrag auf ein Substrat appliziert und nach einer Ablüftungszeit von < 5min eine Nassklebung vor Filmbildung erzeugt wird, wobei die wässrige Polyurethandispersion eine Konzentration an Polychloropren von ≤ 40 Gew. % und einen Restmonomergehalt < 50 ppm enthält, eine Viskosität von < 50 mPas und eine pH-Stabilität von > 2h aufweist und die Scherspannung weitgehend proportional zur Schergeschwindigkeit ist.

Die Begriffe Dispersion und Latex werden im Sinne der vorliegenden Erfindung synonym gebraucht. In beiden Fällen sind in Kombination mit Polychloropren übereinstimmend und gleichbedeutend Produkte aus der radikalischen Emulsionspolymerisation von Chloropren gemeint, wobei Wasser und Polychloropren die Hauptbestandteile sind und in getrennten Phasen vorliegen.

Als Polychloroprenlatex oder darauf basierende Klebstoffformulierung seien auch solche Produkte definiert, die neben Polychloropren andere polymere Bestandteile auf Basis von zum Beispiel Polyacrylat-, Polyvinylidenchlorid-, Polybutadien-, Polyvinylacetat- oder Styrol-Butadien-Dispersionen in einem Anteil von bis zu 50 Gew.-Teilen, bezogen auf die Polychloroprenkonzentration (und die Polychloroprenkonzentration entspricht 100 Gew.-Teilen) enthalten.

Alle Prozentangaben beziehen sich auf die Polymerdispersion oder die Klebstoffformulierung, d.h. polymere Komponenten und wässrige Komponente sind als Gew.-% zu verstehen.

Die Polymerdispersion enthält eine Konzentration an Polychloropren ≤ 40 Gew.-%, bevorzugt ≤ 30 Gew.-%, besonders bevorzugt ≤ 25 Gew.-% und einen Restmonomergehalt von < 50 ppm, bevorzugt < 30 ppm, besonders bevorzugt < 20 ppm.

Des Weiteren weist die Polymerdispersion eine Viskosität von < 50 mPas, bevorzugt < 40 mPas, besonders bevorzugt < 30 mPas, ganz besonders bevorzugt < 20 mPas, gemessen mittels Brookfield-Rheometer bei 60 Umdrehungen/s mit Spindel 2 auf.

Die Polymerdispersion ist durch spezielle rheologische Eigenschaften ähnlich einer Newtonschen Flüssigkeit, wobei die Scherspannung weitgehend proportional zur Schergeschwindigkeit ist und die Viskosität sich über den Bereich von 10-1000 /s um den Faktor ≤ 3, bevorzugt um den Faktor ≤ 2,5, besonders bevorzugt um den Faktor ≤ 2 ändert.

Weiterhin weist die Polymerdispersion eine pH-Stabilität nach DIN 53381, Methode B, von > 2h, bevorzugt > 3h und besonders bevorzugt > 4h auf.

Die Polymerdispersion zeichnet sich weiterhin durch eine Gesamtemulgatorkonzentration von < 1,5 Gew.-%, bevorzugt < 1 Gew.-%, besonders bevorzugt < 0,5 Gew.-% und ganz besonders bevorzugt zwischen 0,3 Gew.-% und 1 Gew.-% aus. Als Emulgatoren kommen prinzipiell alle Verbindungen und deren Mischungen in Betracht, die die Emulsion hinreichend stabilisieren, wie z.B. die wasserlöslichen Salze, insbesondere die Natrium-, Kalium und Ammoniumsalze von langkettigen Fettsäuren, Kolophonium und Kolophoniumderivate, höhermolekulare Alkoholsulfate, Arylsulfonsäuren, Formaldehydkondensate von Arylsulfonsäuren, nicht ionische Emulgatoren auf Polyethylenoxid- und Polypropylenoxidbasis sowie emulgierend wirkende Polymere wie Polyvinylalkohol, bevorzugt die Na- und K-Salze disproportionierter Harzsäuren und alle die genannt sind in folgenden Dokumenten des Standes der Technik DE-A 2 307 811, DE-A 2 426 012, DE-A 2 514 666, DE-A 2 527 320, DE-A 2 755 074, DE-A 3 246 748, DE-A1 271 405, DE-A1 301 502, US-A 2 234 215, JP-A 60-31 510.

Die Polymerdispersion zeichnet sich weiter durch eine Zn-Konzentration von < 0,24 Gew.- %, bevorzugt von = 0 Gew.-% aus.

Die Polymerdispersion weist einen pH-Wert von 10 - 8 bevorzugt von 9,8 - 8,2 und besonders bevorzugt 9,5 - 8,5 auf, ganz besonders bevorzugt pH 9.

Der pH-Wert kann im Bedarfsfall eingestellt werden durch gängige anorganische und/oder organische Säuren und/oder Aminosäuren und/oder deren Puffersysteme als Na- und K-Salze, besonders bevorzugt aber durch Glycin.

Es ist bevorzugt, dass die Polymerdispersion ebenfalls übliche Alterungs-/Oxidationsschutzmittel/UV-Schutzmittel, bevorzugt auf der Basis von oligofunktionellen sekundären aromatischen Aminen oder oligofunktionellen substituierten Phenolen enthält, wie Produkte vom Typ 6-PPD (N-(1,3-Dimethylbutyl)-N'-phenyl-p-phenylendiamin; Vulkanox^{®}, Lanxess Deutschland GmbH), DTPD, DDA, BPH, BHT, Vulkanox^{®}, S. 423, oder Verbindungen auf Basis von HALS (hindered amine light stabilisers), Benzotriazolen, Oxalanilide, Hydroxybenzophenone oder Hydroxyphenyl-S-triazine. Besonders wirksam ist Vulkanox^{®} DDA, ein Diphenylamin-Derivat. Typischerweise werden diese in emulgierter Form als wässrige Dispersion eingebracht. Die erfindungsgemäße Addition eines Alterungsschutzmittels/Oxidationsstabilisators beträgt 0,1 - 5 Gew.-Teile, bevorzugt 1 - 3 Gew.-Teile, besonders bevorzugt 1,5-2,5 Gew.-Teile, bezogen auf die Polychloroprenkonzentration = 100 Teile.

Gemäß einem Verfahren zur Herstellung der Polymerdispersion findet zunächst eine kontinuierliche oder diskontinuierliche (co)Polymerisation von Chloropren in wässriger Emulsion, ohne oder unter Zusatz einer definierten Menge eines Reglers, statt, anschließend werden die restlichen Monomeren zu einem Wert von < 50 ppm entfernt, gegebenenfalls wird nachfolgend mit Wasser verdünnt und schließlich erfolgt gegebenenfalls eine Temperierungslagerung und/oder Aufkonzentration und/oder pH Anpassung und/oder Nachstabilisierung mit gängigen Emulgatoren und gegebenenfalls nachfolgende Verdünnung mit Wasser.

Bevorzugt ist die Polymerisation von Chloropren mit 0 - 20 Gew.-Teilen, bezogen auf 100 Gew.-Teile Chloropren, copolymerisierbaren ethylenisch ungesättigten Monomeren in Gegenwart von 0 - 1 mmol eines Reglers, bezogen auf 100 g Monomer, bevorzugt 0 - 0,5 mmol eines Reglers bei Temperaturen von 0 - 70°C, bevorzugt 5 - 45°C, besonders bevorzugt bei 10 - 25°C, in wässriger, bevorzugt alkalischer Emulsion, wobei die Dispersion einen in organischen Lösemitteln unlöslichen Anteil von 0,1 - 90 Gew.%, bevorzugt 0,5 - 60 Gew.-%, bezogen auf das Polymere, hat.

Die Emulsion wird auf pH-Werte von 11 bis 14, bevorzugt pH 12 bis pH 13 eingestellt. Die Aktivierung erfolgt durch die üblichen Aktivatoren bzw. Aktivatorsysteme.

Als Beispiele für Aktivatoren bzw. Aktivatorsysteme seien genannt: Formamidinsulfinsäure, Kaliumperoxodisulfat, Redoxsysteme auf Basis von Kaliumperoxodisulfat und gegebenenfalls Silbersalz (Na-Salz der Anthrachinon-β-sulfonsäure), wobei beispielsweise Verbindungen wie Formamidinsulfinsäure, das Na-Salz der Hydroxymethansulfinsäure, Natriumsulfit und Natriudithionit als Redoxpartner dienen. Auch Redoxsysteme auf Basis von Peroxiden und Hydroperoxiden sind geeignet. Die Herstellung der erfindungsgemäßen Polychloroprene kann sowohl kontinuierlich als auch diskontinuierlich erfolgen, wobei die kontinuierliche Polymerisation aufgrund der besseren Wirtschaftlichkeit bei der Herstellung von Emulsionspolymerisaten mit niedrigem Feststoffgehalt bevorzugt ist.

Copolymerisierbare Monomere sind, zum Beispiel beschrieben in "Methoden der Organischen Chemie" (Houben-Weyl) XTV/1, 738 f. Georg Thieme Verlag Stuttgart 1961, in einem Anteil von bis zu 20 Gew.-Teilen, bezogen auf die Chloroprenkonzentration = 100 Teile, enthalten. Bevorzugt sind Verbindungen mit 3 bis 12 C-Atomen und 1 oder 2 copolymerisierbaren C=C-Doppelbindungen pro Molekül. Beispiele bevorzugter copolymerisierbarer Monomere sind 2,3-Dichlorbutadien und 1-Chlorbutadien, Acrylnitril, Acrylsäure, Maleinsäure, Fumarsäure oder Ethylenglycoldimethacrylat.

Zur Molekulargewichtseinstellung der Polychloroprene können Kettenübertragungsmittel wie Mercaptane oder wie Xanthogendisulfide verwendet werden. Bevorzugte Kettenübertragungsmittel sind n-Dodecylmercaptan und Xanthogen-disulfide oder Dithiocarbamate.

Die Polymerisation wird üblicherweise bei 50-95 %, bevorzugt bei 60-80 %, besonders bevorzugt bei 65-75 % des Monomerumsatzes abgebrochen, wobei als Inhibitor z.B. Phenothiazin, tert-Butylbrenzcatechin oder Diethylhydroxylamin zugeben werden können.

Bevorzugt hat die Polymerdispersion einen mittleren Partikeldurchmessser von 50 bis 250 nm, bevorzugt von 60 bis 200 nm, besonders bevorzugt 70 bis 150 nm.

Nach der Polymerisation wird das restliche Chloropren Monomer bis auf Restkonzentrationen von < 50 ppm, beispielsweise durch eine Wasserdampfdestillation und/oder Kolonnenentgasung entfernt.

Die Lagerung erfolgt bei Temperaturen von 50°C - 110°C, bevorzugt 60 -100°C, besonders bevorzugt 70 - 90°C, wobei der in organischen Lösemitteln unlösliche Anteil (Gelanteil) um mindestens 10 Gew.-% auf 1 - 60 Gew.-% ansteigt, bevorzugt auf 5 -30 Gew.-%, besonders bevorzugt auf 10 - 20 Gew.-%.

Alternativ kann ein Gelanteil durch Verringerung der Reglerkonzentration und/oder Erhöhung des Monomerumsatzes erreicht werden. Die genannten Geltypen unterscheiden sich deutlich in den Polymereigenschaften von einander.

In einem weiteren Schritt des Herstellverfahrens kann der Feststoffgehalt der Dispersionen durch einen Aufrahmprozess erhöht werden. Diese Aufrahmung erfolgt z.B. durch Zusatz von Alginaten, wie in "Neoprene Latices , John C. Carl, E.I. Du Pont 1964, S.13" beschrieben. Dabei werden überschüssiger Emulgator und Salze zusammen mit dem Serum abgetrennt.

Dabei ist eine Erhöhung des Feststoffanteils von < 50 Gew.-% nach der Polymerisation auf 50 - 65 Gew.-%, bevorzugt auf 52 - 59 Gew.-% durch einen Aufrahmprozess möglich, wodurch eine Dispersion mit einem sehr niedrigen Salzgehalt entsteht, insbesondere einem niedrigen Gehalt an Chlorid-Ionen, der besonders bevorzugt kleiner als 500 ppm ist.

Gegebenenfalls können die erhaltenen Dispersionen mit gängigen Stabilisatoren zur Verbesserung der Alterungs, Oxidations und/oder UV Stabilität versetzt werden.

Des Weiteren kann die erhaltene Dispersion wenn notwendig mittels Wasser und / oder Kieselsäuresuspensionen auf die erfindungsgemäßen Polychloroprenkonzentrationen ≤ 40 Gew.-%, bevorzeugt ≤ 30 Gew.-% besonders bevorzugt ≤ 25 Gew.-% eingestellt werden.

Die Polymerdispersion enthält bevorzugt 40 - 100 Gew.-Teile, bevorzugt 50 - 90 Gew.-Teile, besonders bevorzugt 60 -80 Gew.-Teile von Kieselsäure/Wasserglas als Suspension diskreter Teilchen in Wasser, wobei der Feststoffanteil der Kieselsäure Suspension zur Teileberechnung herangezogen wird und der Polychloropren Feststoffanteil eines Polychloroprenlatex = 100 Teile gesetzt wird.

Bei den Kieselsäuren handelt es sich um solche auf Basis von Kieselsol, Kieselgel, pyrogene Kieselsäuren oder Fällungskieselsäuren oder Mischungen der genannten.

Kieselsäuresole sind kolloidale Lösungen von amorphem Siliciumdioxid in Wasser, die auch als Siliciumdioxidsole meist aber kurz als Kieselsole bezeichnet werden. Das Siliciumdioxid liegt dabei in Form von kugelförmigen und an der Oberfläche hydroxilierten Partikeln vor. Der Partikeldurchmesser der Kolloidteilchen beträgt in der Regel 1 bis 200 nm, wobei die zur Teilchengröße korrelierende spezifische BET-Oberfläche (bestimmt nach der Methode von G.N.Sears, Analytical Chemistry Vol. 28, N. 12, 1981-1983, Dezember 1956) bei 15 bis 2000 m²/g liegt. Die Oberfläche der SiO₂-Teilchen weist eine Ladung auf, die durch ein entsprechendes Gegenion ausgeglichen wird, das zur Stabilisierung der kolloidalen Lösung führt. Die alkalisch stabilisierten Kieselsole besitzen einen pH-Wert von 7 bis 11,5 und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Kieselsole können auch als semistabile kolloidale Lösungen schwach sauer vorliegen. Ferner ist es möglich, durch Beschichtung der Oberfläche mit Al₂(OH)₅Cl kationisch eingestellte Kieselsole herzustellen. Die Feststoff-Konzentrationen der Kieselsole liegen bei 5 bis 60 Gew.-% SiO₂.

Wird für die Polymerdispersion ein als isolierter Feststoff vorliegender SiO₂-Rohstoff, wie beispielsweise pyrogene oder gefällte Kieselsäure, eingesetzt, so wird dieser in eine wässrige SiO₂-Dispersion durch Dispergieren überführt.

Bevorzugt werden solche wässrigen Siliciumdioxid-Dispersionen eingesetzt, deren SiO₂-Partikel eine Primärpartikelgröße von 1 bis 400 nm, bevorzugt 5 bis 100 nm und besonders bevorzugt 8 bis 50 nm aufweisen. Für den Fall das gefällte Kieselsäuren eingesetzt werden, werden diese zwecks Teilchenverkleinerung gemahlen.

Bevorzugte Polymerdispersionen sind solche, in denen die SiO₂-Partikel der Siliciumdioxid-Dispersion als diskrete unvernetzte Primärpartikel vorliegen. Es ist ebenfalls bevorzugt, dass die SiO₂-Partikel über Hydroxylgruppen an der Partikel-Oberfläche verfügen. Besonders bevorzugt werden als wässrige Siliciumdioxid-Dispersionen wässrige Kieselsäuresole eingesetzt.

In einem weiteren Schritt des Verfahrens wird die Dispersion mit gängigen anorganischen und/oder organischen Säuren und/oder Aminosäuren und/oder deren Puffersysteme als Na- und K-Salze auf einen pH von 8-10 eingestellt.

Alle Nachsätze und Formulierungsbestandteile zum Erhalt der Dispersionen können in einem Batchprozess nacheinander oder vorteilhaft auch in einem kontinuierlichen Prozess z.B. durch Vermischung mittels statischer oder dynamischer Mischer erfolgen.

Die Produkte können mittels eines statischen und/oder dynamischem Mischers hergestellt werden, wobei die Mischzeiten < 1h bevorzugt < 30 min besonders bevorzugt < 5 min sind.

Klebstoffzusammensetzungen, enthaltend die Polymerdispersionen enthalten gegebenenfalls die üblichen Klebstoffhilfs- und Zusatzmittel wie zum Beispiel Metalloxide wie MgO und/oder ZnO als zusätzliche Säurefänger. Weitere Klebstoffhilfs- und Zusatzmittel sind beispielsweise Füllstoffe wie Quarzmehl, Quarzsand, hochdisperse Kieselsäure, Schwerspat, Calciumcarbonat, Kreide, Dolomit oder Talkum, gegebenenfalls zusammen mit Netzmitteln, beispielsweise Polyphosphaten (wie Natriumhexametaphosphat), Naphthalinsulfonsäure, Ammonium- oder Natriumpolyacrylsäuresalze, sowie Alkali und Erdalkali-Salze der Phosphorsäure, wobei die Füllstoffe im allgemeinen in Mengen von 0 bis 60 Gew.-Teile, bezogen auf die Polychloroprenkonzentration = 100 Teile, und die Netzmittel im allgemeinen in Mengen von 0 bis 1 Gew.-Teile, bezogen auf Füllstoff, zugesetzt werden.

Die Klebstoffzusammensetzungen enthaltend die Polymerdispersion können gegebenenfalls auch andere Dispersionen wie z.B. Polyacrylat-, Polyvinylidenchlorid-, Polybutadien-, Polyvinylacetat- oder Styrol-Butadien-Dispersionen in einem Anteil von bis zu 50 Gew.-Teilen, bezogen auf die Polychloropren(co)polymerenkonzentration = 100 Teile, enthalten.

Weitere mögliche Hilfsmittel sind beispielsweise in Mengen von 0 bis 3 Gew.-Teilen, bezogen auf die Polychloroprenkonzentration = 100 Teile, einzusetzende organische Verdickungsmittel, wie Cellulosederivate, Alginate, Stärke, Stärkederivate oder Polyacrylsäure oder in Mengen von 0 bis 10 Gew.-Teile, bezogen auf die Polychloroprenkonzentration = 100 Teile, einzusetzende anorganische Verdickungsmittel, wie beispielsweise Bentonite.

Zur Konservierung können der Klebstoffzusammensetzung auch Fungizide und Bakterizide zugesetzt werden. Diese kommen im allgemeinen in Mengen von 0 bis 1 Gew.-%, bezogen auf Klebstoff, zum Einsatz. Geeignete Fungizide sind beispielsweise Phenol- und Kresolderivate oder zinnorganische Verbindungen.

Auch klebrigmachende Harze, wie z.B. unmodifizierte oder modifizierte Naturharze wie Kolophoniumester, Kohlenwasserstoffharze oder synthetische Harze wie Phthalatharze können der Klebstoffzusammensetzung in dispergierter Form gegebenenfalls zugesetzt werden. Bevorzugt sind Alkylphenolharz-Dispersionen mit Erweichungspunkten größer 110°C.

Organische Lösungsmittel wie beispielsweise Toluol, Xylol, Butylacetat, Methylethylketon, Ethylacetat, Dioxan oder deren Gemische oder Weichmacher wie beispielsweise solche auf Adipat-, Phthalat- oder Phosphatbasis können gegebenenfalls den Polychloropren- Dispersionen zugesetzt werden.

Die Polymerdispersionen/Klebstoffe können mittels aller gängigen Applikationsformen auf die Substrate aufgebracht werden wie Streichen, Rollen, Spritzen und Sprühen, bevorzugt erfolgt der Auftrag der Klebstoffe mittels Sprühapplikation.

Gegenstand der vorliegenden Erfindung ist ein Verfahren zur Herstellung einer Nass-in-Nass Verklebung von Schaumstoffen, dadurch gekennzeichnet, dass eine Klebstoffzusammensetzung enthaltend die Polymerdispersionen mittels Sprühauftrag Walzenauftrag oder Pinselauftrag auf ein Substrat appliziert wird und nach einer Ablüftungszeit von < 5min, bevorzugt < 2min, besonders bevorzugt ≤ 1min eine Nassklebung vor Filmbildung erzeugt wird.

Ein besonderes Merkmal der Dispersionen ist ihre Alterungsstabilität bei erhöhter Temperatur, wobei nach einer Lagerung von 1 Stunde, bevorzugt 3h, besonders bevorzugt 8h, bei 90°C sowie 3d, bevorzugt 5d, besonders bevorzugt 7d bei 70°C keine Ausscheidungen > 5%, bevorzugt > 3%, besonders bevorzugt > 1% zu beobachten sind. Dabei wird eine Viskositätsänderung < 30 mPa*s, bevorzugt <25 mPa*s, besonders bevorzugt <20 mPa*s beobachtet. Das gealterte Produkt kann ohne Funktions verlust durch Verlängerung der Kontaktzeit auf mehr als 5 min zur Verklebung von z.B. Schaumstoffen mittels Sprühapplikation, Streich und Walzenapplikation eingesetzt werden.

Ein weiteres besonderes Merkmal der Dispersionen ist ihre Tieftemperaturstabilität, wobei nach Abkühlung auf < 5°C, bevorzugt 3,5°C, besonders bevorzugt 2°C keine Ausscheidungen > 5%, bevorzugt > 3%, besonders bevorzugt > 1% zu beobachten sind. Dabei wird eine Viskositätsänderung < 30 mPa*s, bevorzugt <25 mPa*s, besonders bevorzugt <20 mPa*s beobachtet. Die Scherstabilität bleibt bei einer Scherrate von 1000 /s, bevorzugt 5000 /s, besonders bevorzugt 10000/s für > 1 min, bevorzugt 3min, besonders bevorzugt 5 min ohne Bildung von Koagulat erhalten. Das gekühlte Produkt kann ohne Funktionsverlust durch Verlängerung der Kontaktzeit auf mehr als 5 min zur Verklebung von z.B. Schaumstoffen mittels Sprühapplikation, Streich und Walzenapplikation eingesetzt werden.

Ein weiteres besonderes Merkmal der Dispersionen ist ihre Langzeitlagerstabilität sowie Langzeitstabilität gegenüber Bakterien- und Pilzbefall auch ohne Zusatz von Bakteriostatika oder Fungiziden, wobei nach 3 Monaten, bevorzugt 4 Monaten, besonders bevorzugt 5 Monaten bei RT (sei definiert als 21 °C) keine Ausscheidungen > 5%, bevorzugt > 3%, besonders bevorzugt > 1% zu beobachten sind. Dabei wird eine Viskositätsänderung < 30 mPa*s, bevorzugt <25 mPa*s, besonders bevorzugt <20 mPa*s beobachtet. Das Produkt kann ohne Funktionsverlust durch Verlängerung der Kontaktzeit auf mehr als 5 min zur Verklebung von Schaumstoffen mittels Sprühapplikation, Streich und Walzenapplikation eingesetzt werden.

Ein besonderes Merkmal des erfindungsgemäßen Verfahrens ist, dass der Klebstoffauftrag mit Bezug auf Polychloropren mit < 75 g/m² Substratfläche, bevorzugt <50 g/m² Substratfläche, besonders bevorzugt < 40 g/m² Substratfläche erfolgen kann.

Im erfindungsgemäßen Verfahren wird der Sprühauftrag mittels der üblichen Mitteldrucksprühapplikation im Bereich von 0,5 - 6 bar durchgeführt, jedoch ist auch der Sprühauftrag mit handelsüblichen im Heimwerkerbereich weit verbreiteten "drucklosen" Batterie oder Strom betriebenen Sprühpistolen möglich.

Die Polymerdispersion kann zum Verkleben beliebiger Substrate gleicher oder verschiedener Art, z.B. von Holz, Papier, Kunststoffen, Textilien, Leder, Gummi und anorganischen Materialien, wie Keramik, Steingut oder Asbestzement verwendet werden, bevorzugt ist die Verklebung von Schaumstoffen.

Die Polymerdispersion kann als Klebstoffformulierung in der Streich- Roll-, Spritz- und Sprühapplikation verwendet werden. Ebenfalls ist eine Verwendung der Polymerdispersionen zur Herstellung von Schaumstoffverklebungen in der Matratzen- und Möbel/Polsterverklebung möglich.

Gemäß einem Verfahren zur Herstellung von Verbundmaterialien werden bei der Verklebung der Fügeteile die Polymer-dispersionen eingesetzt.

### Beispiele

### A) Einsatzstoffe

**Tabelle 1: Polymerdispersionen**

| **Dispersion** | **Polychloroprentyp** | **Produkt** |
|---|---|---|
| | pH 12, stark kristallisierend, gelfrei, Feststoffgehalt 55 +/- 0,5 % | Dispercoll^{®} C 84, BMS AG, DE |
| | pH 12, mittelstark kristallisierend mittlerer Gelgehalt, Feststoffgehalt 58 +/-0,5% | Dispercoll^{®} C 74, BMS AG, DE |
| | pH 12, langsam kristallisierend, Feststoffgehalt 58 +/- 0,5 % | Dispercoll^{®} C VPLS 2372H, BMS AG, DE |
| | pH 12 schnell kristallisierend, Feststoffgehalt 55%+/- 0,5 % | Dispercoll^{®} C VPLS 2325 |
| | | BMS AG, DE |
| | pH 12 schnell kristallisierend, gelfrei Feststoffgehalt 32 +/- 1% | Dispercoll^{®} C84 Dünnlatex BMS AG, DE |
| | pH 12 normal kristallisierend, gelfrei Feststoffgehalt 32 +/- 1% | Baypren^{®} 210 Dünnlatex Lanxess AG, DE |
| | pH 12 langsam kristallisierend, gelfrei Feststoffgehalt 32 +/- 1 % | Baypren^{®} 110 Dünnlatex Lanxess AG, DE |
| | pH 12 schnell kristallisierend, gelfrei Feststoffgehalt 32+-1% | Baypren^{®} 320 Dünnlatex Lanxess AG, DE |
| | pH 12 schnell kristallisierend, Feststoffgehalt 32 +/- 1% | Dünnlatex Dispercoll^{®} C VPLS 2325 |
| | | BMS AG, DE |
| | pH 12 schnell kristallisierend, Feststoffgehalt 32 +/- 1 % | Dünnlatex Dispercoll^{®} C VPLS 2372H |
| | | BMS AG, DE |
| | pH 12 schnell kristallisierend, gelfrei Feststoffgehalt 32 +/- 1 % | Dispercol^{l®} C 84, Verdünnt mit VE Wasser |
| | | BMS AG, DE |
| | pH 12 schnell kristallisierend, Feststoffgehalt 32 +/- 1 % | Dispercoll^{®} C VPLS 2325 Verdünnt mit VE Wasser |
| | | BMS AG, DE |
| | pH 12 schnell kristallisierend, Feststoffgehalt 32 +/- 1 % | Dispercoll^{®} C VPLS 2372H Verdünnt mit VE Wasser |
| | | BMS AG, DE |

**Tabelle 2: Kieselsäure Suspensionen**

| **Produkt** | **Lieferant** | **Lieferform** | **Typ** |
|---|---|---|---|
| Dispercoll^{®} S3030 | BMS AG, DE | Dispersion, 30 %ig | Kieselsol |
| Dispercoll^{®} S5005 | BMS AG, DE | Dispersion, 50 %ig | Kieselsol |

**Tabelle 3: Zusatz- und Hilfsstoffe**

| **Produkt** | **Feststoffgehalt** | **Funktion** | **Hersteller** |
|---|---|---|---|
| Rhenofit^{®}DDA-EM 50 | 50 % | Alterungsschutzmittel | Lanxess AG |
| Borchers^{®} VP 9802 ZnO | 50 % | Stabilisator | Borchers GmbH, Langenfeld, DE |
| Evonik^{®} VP AD Nano ZnO 20 DW | 35% | Stabilisator | Evonik AG |
| Plextol^{®} 4545 | 50% | Acrylatlatex | Polymer Latex |

**Tabelle 4: Fertige Klebstoffdispersionen**

| **Produkt** | **Feststoffgehalt** | **Funktion** | **Hersteller** |
|---|---|---|---|
| V1 = Simalfa 309 | 54% | Sprühklebstoff | Simalfa AG |
| V2 = Upaco 7300E | 50% | Sprühklebstoff | Worthen industries Inc |
| V3 = Saba 3700 | 50% | Sprühklebstoff | Saba Dinxperlo BV |
| V4 = Richtrezeptur BMS | 53% | Sprühklebstoff | BMS, AG , 1K Sprüh-Richtrezeptur |

### B) Messmethoden

### 1. Bestimmung des Gelgehaltes aus der Dispersion

Die Dispersion wird auf eine Glasplatte aufgetragen und 3 Tage bei Raumtemperatur unter eine Stickstoffatmosphäre zu einem Film getrocknet. 250 mg Probe werden in 25 ml THF (versetzt mit 1 g Polymerisationsinhibitor je Liter THF) 24 Stunden bei Raumtemperatur in einem abgeschlossenen Gefäß gelöst bzw. gequollen. Die Mischung wird 1 Stunde lang bei 20.000 Upm ultrazentrifugiert und der Gewichtsanteil des abzentrifugierten Materials nach Trocknung bestimmt.

### 2. Bestimmung der Viskosität

Die Viskosität der Dispersionen wird mittels Brookfield Viskosimeter nach einem Bayer-Verfahren gemessen.

Spindel Nr. 2 wird vorsichtig in die zu messende Dispersion eingetaucht, möglichst ohne Luftblasenbildung. Probenflasche auf eine Hebebühne stellen und vorerst soweit hochfahren, das die Spindel an der Antriebsachse befestigt werden kann (anschrauben - Linksgewinde), ohne das der Spindelkörper aus der Dispersion auftaucht.

Hebebühne weiter hochfahren, die Spindel bis zur Eintauchrille am Spindelschaft in die Probe eintauchen. Motor einschalten.

Sobald sich die LED-Anzeige des Messwertes stabilisiert hat, wird der Messwert abgelesen. Die Messung erfolgt standardgemäß bei 60 U/min mittels Spindel 2. Bei höheren Viskositäten wird die Drehzahl zur Stabilisierung des Messwertes auf 30 U/min reduziert.

### 3. Bestimmung der HCl Stabilität

Die Prüfung der getrockneten Klebstoffproben erfolgt angelehnt an DIN 53381, Methode B.

### Durchführung der Messung:

### Messgerät: 763 PVC - Thermomat der Firma Metrohm, CH-9101 Herisau, Schweiz

Die Proben (Dicke 0,1-1 mm) werden auf eine Kantenlänge von ca. 2-3 mm geschnitten, 0,2 g in ein Reagenzglas eingewogen und die Messung bei 180°C und Luft als Trägergas durchgeführt. Gemessen wird der elektrische Widerstand von Wasser, in dem sich das gebildete HCl-Gas wieder löst. Als HCl-Stabilität wird der Zeitpunkt angegeben, bei dem der elektrische Widerstand den Wert von 50 µS/cm erreicht hat. Je höher der Wert ist, um so stabiler ist die gemessene Probe gegenüber HCl-Abspaltung.

### 4. Bestimmung der Emulgatorkonzentration (Harzsäurederivate)

Die Bestimmung der Emulgatorkonzentration bezüglich der Harzsäuresalze als Hauptemulgator von Polychloroprendispersionen erfolgt per Titration aus THF Lösung mittels Titrationssystem "Tinet 2" von der Fa. Metrohm. Die Titration erfolgt mit einer Solvotrode (Nr. 6.0229.100), die in Wasser gelagert wird und tagsüber vor und zwischen den Messungen in einem Gemisch THF/Wasser (80:20) in Meßbereitschaft gehalten wird. Titriermittel ist eine 0,1 molare Perchlorsäurelösung. Das Auswerten der Ergebnisse und das Einlesen von Werten und Titrationskurven in eine vom System vorgegebene Tabelle erfolgt automatisch. Bei bekannter Zusammensetzung kann der Emulgatoranteil auch berechnet werden. Weitere zusätzliche Emulgatoren werden nach Abtrennung über quantitative IR - Analytik bestimmt.

### 5. Messung / Berechnung der Polychloroprenkonzentration aus dem Feststoffgehalt

Die Polychloroprenkonzentration aus Klebstoffformulierungen wird gravimetrisch durch Umlösen des polymeren Anteils mittels Toluol/Essigsäure oder THF und anschließender Fällung des Polymeranteils in Methanol nach Trocknung bestimmt. Sind verschiedene Polymere Anteile vorhanden, so erfolgt eine Quantifizierung der Anteile mittels angeschlossener quantitativer IR Analytik. Bei bekannter Zusammensetzung kann der Polychloroprenanteil auch berechnet werden.

### 6. Bestimmung des Restmonomergehaltes

Der Restmonomergehalt wird mittels Gaschromatographie nach einer Bayer-Werksmethode aus dem Latex nach Umlösen des Polymeren in eine organische Phase ermittelt.

### 7. Bestimmung der Reaktivität bezüglich nass in nass Klebens mittels Sprühapplikation auf Polyurethan Schaumkörper.

Die Klebstoffformulierung wird mittels Walther PILOT Typ: XIII-ND Sprühpistole bei ca. 3 bar Luftdruck auf das Prüfmaterial aufgebracht.

Als Prüfmaterial werden PU-Schaumkörper wie folgt verwendet: Schaumqualität: stn / schaumstoff-technik-Nürnberg GmbH
Typ: ST 5540, Abmessung Prüfkörper: 101x49x30 mm
Materialbasis: PUR, Farbe: weiß, Bruttogewicht (kg pro m²): 40
Nettorohdichte (kg pro m³) ISO-845: 38, Stauchhärte 40% (kPa) DIN EN ISO 3386: 5,5
Zugfestigkeit (kpa) DIN EN ISO 1798: >120, Bruchdehnung (%) ISO-1798: > 110
Druckverformungsrest (50%/70°C/22h) DIN EN ISO-1856: <4

Zur Beurteilung der : nass-in-nass Klebbarkeit und Anfangsfestigkeit werden die Probekörper sofort und zu unterschiedlichen Zeiten nach dem Klebstoffauftrag von ca. 40-300g / m² nass mit einem Holzstab in der Mitte geknickt und durch 2 Stahlrollen mit Abstand von 10mm innerhalb von < 3 sec. durchgeführt. Die minimale Wartezeit bis die Klebung eine ausreichende Sofortfestigkeit hat, so dass die Rückstellkräfte des Schaumes die Klebung nach Durchgang durch den Spalt nicht mehr öffnet, wird festgehalten, sowie die längste Zeit bei der eine erfolgreiche Klebung noch möglich ist (offene Zeit).

In einer alternativen Verfahrensweise wird die Klebstoffformulierung mittels Wagner W 550 Feinsprühsystem mittels Kleinstmengendüse oder analoger Gebläse betriebener "druckloser (<0,5 bar)" Sprüh-Applikationssysteme aufgetragen. Die Auftragsmenge und Prüfung der Klebbarkeit und Anfangsfestigkeit erfolgt analog zu oben.

### 8. Bestimmung der Wärmebeständigkeit an Schaumverklebungen.

Die wie oben beschriebenen Schaumverklebungen werden in einem auf 50°C, 70°C , 90°C, 110°C, 130°C vorgeheizten Heißluftofen für mindestens 2h getempert und die Temperatur beim Versagen der Klebung (Öffnen des gespannten verklebten Schaumstoffes siehe Methode 7) bestimmt.

### 9. Bestimmung der Viskositätsstabiliät der Formulierungen

Die Prüfung erfolgt durch wiederholte Viskositätsmessung an den Klebstoffformulierungen mittels Brookfield Viskosimeter nach vorzugsweise 1,3 und 7 Tagen.

### 10. Bestimmung der Schälfestigkeit an NORA Prüfkörpern

Die Prüfung erfolgt gemäß EN 1392.

Auf zwei Prüfkörper (Nora-Gummi, gerauht, 100 x 30 mm) wird ein 100 µm dicker Nassfilm der Dispersion aufgetragen und 1 Stunde bei Raumtemperatur gelüftet. Anschließend werden die Prüflinge 10 Sekunden lang mit 4 bar zusammengefügt. Es erfolgt eine Reißprüfung auf einer handelsüblichen Zugprüfmaschine bei Raumtemperatur. Es werden die Festigkeitswerte sofort nach der Verklebung, nach 1 und 9 Tagen ermittelt.

### 11. Bestimmung der Wärmeformbeständigkeit

Die NORA-Prüfkörper werden mit einer Überlappung von 2 cm² verklebt, mit 4 kg belastet und in einem Heizschrank innerhalb von 30 min. auf 40°C temperiert. Anschließend werden die Prüfkörper mit einer linearen Heizrate von 0,5°C/min. auf 150°C aufgeheizt. Die Erweichungstemperatur, d.h. die Temperatur in °C bei der die Klebung unter der 4 kg Last im Scherversuch versagt, wird registriert. Es werden jeweils 5 Einzelmessungen durchgeführt.

### 12. Bestimmung der Scherbeständigkeit

Die Scherstabilität von Dispersionen wird in einem Rotationsrheometer mit Couette oder Searle-Messvorrichtung bestimmt. Dabei wird bei einer festgelegten Temperatur (25°C) und einen sehr geringen Scherspalt (Spaltbreite 240µm, Aussendurchmesser 13,308 mm und Innendurchmesser 13,0655 mm) eine logarithmische Schergeschwindigkeitsrampe durchlaufen (von 0 bis 15.000 1/s in 240 s). Scherinduzierte Koagulation führt zu einer plötzlichen scheinbaren Zunahme der Viskosität, weil die Koagulate den Scherspalt verstopfen. Diese Schergeschwindigkeit, wobei die Zunahme der Viskosität festgestellt wird, wird als Maß für die Scherstabilität genommen. Sofern sich bei einer Probe während der Schergeschwindigkeitsrampe keine Koagulatbildung zeig, wird bei der maximalen Schergeschwindigkeit von 15000 s⁻¹ über einen Zeitraum von 600s mit einem Messtakt von 1 s (1 Viskositätsbestiimung/s) weitergeschert. Sollte die Viskosität während dieser Zeitrampe plötzlich zunehmen, dann wird diese Zeit als Maß für die Stabilität gewertet.

### 13. Bestimmung der rheologischen Eigenschaften

Die Bestimmung der rheologischen Eigenschaften erfolgt nach DIN 53019 Determination of viscosity and flow curves with rotational viscometers (bzw. ISO 3219).

### 14. Bestimmung des pH Wertes

In die zu prüfende Dispersion bzw. Lösung wird eine Einstab-Messelektrode (z.B. Sentron pH Meter) eingetaucht. Diese enthält eine Mess- und eine Bezugselektrode. Die zwischen Mess- und Bezugselektrode bestehende Potentialdifferenz wird als pH-Wert auf dem Messgerät abgelesen. Zur Handhabung der Einstab-Messelektrode ist die jeweilige Bedienungsanleitung des Herstellers zu beachten.

### C) Herstellungsverfahren der klebstoffformulierungen Verfahren: Polymerisation von Chloropren

Die Polymerisation erfolgt durch einen Konti-Prozess, wie er in der EP-A 0 032 977 beschrieben ist.

### Beispiel A1

In den ersten Reaktor einer Polymerisationskaskade, bestehend aus 7 gleichen Reaktoren mit einem Volumen von je 50 Liter werden die wässrige Phase (W) und die Monomerphase (M) über eine Meß- und Regelapparatur in stets konstantem Verhältnis sowie die Aktivatorphase (A) eingefahren. Die mittlere Verweilzeit je Kessel beträgt 25 Minuten. Die Reaktoren entsprechen denen in der DE-A 2 650 714 beschriebenen (Angaben in Gew.-Teilen pro 100 g Gew.-Teile eingesetzte Monomere).

**(M) = Monomerphase:**

| | |
|---|---|
| Chloropren | 100,0 Gew.-Teile |
| n-Dodecylmercaptan | 0,11 Gew.-Teile |
| Phenothiazin | 0,005 Gew.-Teile |

**(W) = wässrige Phase:**

| | |
|---|---|
| Entsalztes Wasser | 115,0 Gew.-Teile |
| Natriumsalz einer disproportionierten Abietinsäure | 2,6 Gew.-Teile |
| Kaliumhydroxyd | 1,0 Gew.-Teile |

**(A) = Aktivatorphase:**

| | |
|---|---|
| 1 %ige wässrige Formamidinsulfinsäurelösung | 0,05 Gew.Teile |
| Kaliumpersulfat | 0,05 Gew.Teile |
| Anthrachinon-2-sulfonsäure-Na-salz | 0,005 Gew.Teile |

Bei einer Innentemperatur von 15°C springt die Reaktion leicht an. Durch eine Außenkühlung wird die freiwerdende Polymerisationswärme abgeführt und die Polymerisationstemperatur auf 10°C gehalten. Bei einem Monomerumsatz von 70 % wird die Reaktion durch Zugabe von Diethylhydroxylamin abgebrochen.

Das restliche Monomere wird durch Wasserdampfdestillation mit anschließender Kolonnenentgasung auf einen Restmonomergehalt < 50ppm aus dem Polymeren entfernt. Der Feststoffgehalt liegt bei ca. 32 Gew.-%, der Gelgehalt bei 0,1 Gew.-%, der pH Wert bei 13.

Nach einer Polymerisationszeit von 120 Stunden wird die Polymerisationsstraße ausgefahren.

### Beispiel B 1

Man verfährt wie im Beispiel A1, reduziert jedoch den Regleranteil auf 0,03 Gew.-%, erhöht den Monomerumsatz auf 80% und die Polymerisationstemperatur auf 45°C, um ein Polymer mit hohem Gelgehalt zu erzeugen.

Der Feststoffgehalt liegt bei 38 Gew.-% und der Gelgehalt bei 60 Gew.-%, der pH- Wert bei 12,9.

### Weiterverarbeitung der Dispersionen

### Aufarbeitung 1: Verdünnung, Stabilisierung, pH Einstellung

Die erhaltenen Dispersionen aus Beispiel A 1 und B 1 werden mit entionisiertem Wasser auf einen Polychloroprengehalt von ca. 30% reduziert, mit 2 Teilen Rhenofit DDA 50 EM bezogen auf die Polychloroprenkonzentration = 100 Teile versetzt und mit Glycin Pulver auf pH 9,5 eingestellt. Erhalten wird das erfindungsgemäße Produkt A 2 und Produkt B 2.

### Aufarbeitung 2: Hydrolyse des allylischen Cl sowie Gelgehaltsteigerung

Die Dispersion A 1 wird in einem isolierten Lagertank 6 Stunden bis 6 Tage bei Temperaturen zwischen 60 und 90°C getempert, wobei die Temperatur gegebenenfalls durch eine Zusatzheizung nachreguliert wird und der Anstieg des Gelgehaltes im Latex an Hand von Proben gemessen.

Die Proben werden im Anschluss der Aufarbeitung 1. Verdünnung, Stabilisierung, pH Einstellung zugeführt. Erholten wird das erfindungsgemäße Produkt A 3.

### Aufarbeitung 3: Aufrahmprozess

Festes Alginat (Manutex) wird in entionisiertem Wasser aufgelöst und eine 2 gew.-%ige AlginatLösung hergestellt. In acht 250ml Glasflaschen werden je 200 g der Polychloropren-Dispersion A 1, B 1, A3 vorgelegt und mit jeweils 6 bis 20g der Alginatlösung - in 2 g Schritten - eingerührt. Nach einer Lagerzeit von 24 Stunden wird die Menge des entstandenen Serums über dem Dicklatex gemessen. Die Alginatmenge der Probe mit der stärksten Serumbildung wird mit 5 multipliziert und ergibt die optimale Alginatmeng für die Aufrahmung von 1 kg Polychloropren-Dispersion. Die Dispersionen werden auf ein Fesstoffkonzentration von > 50% bezogen auf die Polychloroprenkonzentration aufgerahmt, das erhaltene Serum verworfen.

Die Proben werden im Anschluß dem der Aufarbeitung 1. Verdünnung, Stabilisierung, pH Einstellung zugeführt Erhalten wird das erfindungsgemäße Produkt A 4 und B 3.

### Aufarbeitung 4: Verdünnung mit wässrigen Kieselsäuresolen (Dispercoll^{®} S) Stabilisierung, pH-Wert Einstellung

Aufbauend auf Aufarbeitung 3. werden anstelle einer direkten pH-Wert-Einstellung und Stabilisierung, mit Dispercoll S3030 auf < 35% Konzentration Polychloropren verdünnt und wie oben beschrieben stabilisiert und auf pH 9,5 eingestellt.

Erhalten wird das erfindungsgemäße Produkt A5 und B4.

### Beispiel C: Allgemeines Verfahren zur Herstellung erfindungsgemäßer Klebstoffformulierungen ausgehend von Dispercoll^{®} C Handelsprodukten mit Monomerkonzentration < 50 ppm.

Für die Herstellung einer Formulierung wird Dispercoll^{®} C 84 / 74 / VPLS 2325 / VPLS 2372H als Einzelkomponente oder in Abmischung wie gewerblich erhältlich in einem Becherglas vorgelegt. Nacheinander werden dann das Antioxidant Rhenofit^{®} DDA-50 EM als 50% Dispersion und bedarfsgemäß das Zinkoxid in Form der Dispersion Borchers 9802 sowie weitere Bestandteile wie Harze, Füllstoffe, Verdicker typischerweise als Dispersion vorliegend unter Rühren zugegeben. Zum Schluss wird bedarfsgemäß das Kieselsol (Dispercoll^{®} S) unter Rühren zugesetzt. Alternativ zum Kieselsol wird die Konzentration des Polychloroprens in der Formulierung mittels entionisiertem Wasser auf den gewünschten Wert herabgesetzt.

Im Anschluß nach Einmischung aller gewünschte Bestandteile erfolgt die pH-Einstellung mittels Glycin Pulver bis auf den Ziel pH der Formulierung.

### Beispiel D: Allgemeines Verfahren zur Herstellung von vergleichenden (nicht erfindungsgemäßen) Klebstoffformulierungen wiederum ausgehend von Dispercoll^{®} C Handelsprodukten.

Die Herstellung von Klebstoffformulierungen (Vergleichsbeispiele, nicht erfindungsgemäß) gemäß Tabelle 5-11 gekennzeichnet durch * erfolgt durch Zusammenrühren der Komponenten im Becherglas, beginnend mit Polymerdispersion. Nacheinander werden dann weitere bedarfsgemäße Bestandteile wie Stabilisatoren, ZnO, Harze, Füllstoffe, Verdicker, Kieselsäuresuspensionen, Zusatzemulgatoren typischerweise als Dispersion vorliegend unter Rühren zugegeben.

Die Angaben für die eingesetzten Teile von Formulierungsbestandteilen beziehen sich immer auf den Feststoffanteil beziehungsweise auf den nicht wässrigen Anteil des Formulierungsbestandteiles mit Bezug auf den Feststoff-Anteil des Polychloropren Latex welcher gleich 100 Teile gesetzt wird.

Diese Regel hat immer Gültigkeit mit Ausnahme des Zusatzes von Wasser als explizitem Formulierungsbestandteils, wobei das Wasser dann mengenmäßig wiederum direkt bezogen wird auf den Feststoff-Anteil des Polychloropren Latex welcher gleich 100 Teile gesetzt wird.

**Tabelle 5: Einfluss des pH Werts auf Klebeigenschaften**

| **Zusammensetzung Formulierung [Teile]** | **1*** | **2*** | **4** | **5** | **6** | **7** | **8** |
|---|---|---|---|---|---|---|---|
| Dispercoll^{®} C 84 Dünnlatex [32%] | 100 | 100 | 100 | 100 | 100 | 100 | 100 |
| Rhenofit^{®} DDA-50 EM [50%] | 2,0 | 2,0 | 2,0 | 2,0 | 2,0 | 2,0 | 2,0 |
| Glycinpulver [100%] | 0 | 1 | 2 | 3 | 4 | 6 | 31 |
| | | | | | | | |

| **Ergebnisse:** | | | | | | | |
|---|---|---|---|---|---|---|---|
| pH-Wert | 12,6 | 11,9 | 9,8 | 9,7 | 9,6 | 9,5 | 8,6 |
| Monomergehalt [ppm] | 11 | 10 | 10 | 10 | 10 | 10 | 8 |
| Feststoffgehalt [%] | 32 | 32 | 33 | 33 | 33 | 34 | 38 |
| Feststoffgehalt Polychloropren [%] | 31 | 30 | 30 | 30 | 30 | 30 | 28 |
| Viskosität [mPa*s] | 12 | 10 | 23 | 19 | 18 | 20 | 40,6 |
| HCL-Stabilität bei 50 µS [min.] | 48 | 156 | 126 | 221 | 268 | 279 | 340 |
| Kontaktierung nach 1-K Sprüh [min.] | >10 | >10 | 2 | (1) | 2 | 1 | 2 |
| Offene Zeit [min] | - | - | >10 | >10 | >10 | >10 | >10 |

Nicht erfindungsgemäße Beispiele sind mit * gekennzeichnet. Eine Zahl in Klammem bei der Zeile Kontaktierung nach 1-K Sprüh [min] bedeutet, dass die Verklebung erfolgreich war, jedoch eine leichte Kantenablösung sichtbar ist.

Es ist deutlich zu sehen, dass bei Einsatz von nicht erfindungsgemäßen pH Werten eine nass in nass Klebung < 5min nicht erfolgreich ist. Weiter ist zu sehen, dass z.T keine ausreichende HCl und damit Lagerstabilität erreicht wird.

**Tabelle 6: Einfluss der Verdünnung auf Klebeigenschaften**

| **Zusammensetzung Formulierung [Teile]** | **9*** | **10** | **11** | **12** | **13** |
|---|---|---|---|---|---|
| Dispercoll^{®} C 84 verdünnt [32%] | | | | | 100 |
| Dispercoll^{®} C 2372H verdünnt [32%] | | 100 | 50 | 50 | |
| Dispercoll^{®} C 2372H [55%] | 100 | | | | |
| Dispercoll^{®} C 2325 verdünnt [32%] | | | 50 | 50 | |
| Rhenofit^{®} DDA-50 EM [50%] | 2,0 | 2,0 | 2,0 | 2,0 | 2,0 |
| Dispercoll^{®} S 3030 [30 %] | | | | 80 | |
| Glycinpulver [100%] | 2 | 1,5 | 2 | 2 | 1,5 |
| | | | | | |

| **Ergebnisse:** | | | | | |
|---|---|---|---|---|---|
| pH-Wert | 9,5 | 9,5 | 9,5 | 9,5 | 9,5 |
| Monomergehalt [ppm] | 31 | 12 | 13 | 4 | 10 |
| Feststoffgehalt [%] | 56 | 33 | 33 | 31 | 33 |
| Feststoffgehalt Polychloropren [%] | 52 | 30 | 30 | 17 | 30 |
| Viskosität [mPa*s] | 105 | 14 | 13 | 17 | 20 |
| HCL-Stabilität bei 50 µS [min.] | >291 | >311 | >281 | >580 | 281 |
| Kontaktierung nach 1-K Sprüh [min.] | 3 | 2 | 2 | 3 | 1 |
| Offene Zeit | >10 | >10 | >10 | >10 | >10 |

Es ist deutlich zu sehen, dass der Verzicht auf eine Aufrahmung und / oder die Verdünnung von handelsüblichen Latices die Klebeigenschaften in Kombination mit den erfindungsgemäßen Eigenschaften wie pH und Viskosität nicht verschlechtert zum Teil verbessert.

**Tabelle 7: Einfluss der Verdünnung mit Dispercoll^{®} S 3030 (30%) Kieselsäure Suspensionen auf die Klebeigenschaften und Wärmeformbeständigkeit**

| **Zusammensetzung Formulierung [Teile]** | **14*** | **15** | **16** | **17** | **18** | **19** |
|---|---|---|---|---|---|---|
| Dispercoll^{®} C 84 verdünnt auf [32%] | | 100 | | 100 | | |
| Dispercoll^{®} C 84 [55%] | 100 | | 100 | | | |
| Dispercoll^{®} C 2325 verdünnt [32%] | | | | | | 100 |
| Dispercoll^{®} C VP LS 2325 [55%] | | | | | 100 | |
| Rhenofit^{®} DDA-50 EM [50%] | 2,0 | 2,0 | 2,0 | 2,0 | 2,0 | 2,0 |
| Dispercoll^{®} S 3030 [30 %] | | | 80 | 80 | 80 | 80 |
| Glycinpulver [100%] | 1,5 | 1 | 1,5 | 1 | 2 | 1,5 |
| | | | | | | |

| **Ergebnisse:** | | | | | | |
|---|---|---|---|---|---|---|
| pH-Wert | 9,5 | 9,5 | 9,5 | 9,5 | 9,5 | 9,5 |
| Restmonomergehalt [ppm] | 34 | 15 | 14 | 5 | 18 | 6 |
| Feststoffgehalt Polychloropren [%] | 52 | 31 | 22 | 17 | 22 | 17 |
| Feststoffgehalt [%] | 56 | 34 | 41 | 32 | 41 | 32 |
| Viskosität [mPa*s] | 73,1 | 20 | 24 | <5 | 20 | <5 |
| HCL-Stabilität bei 50 µS [min.] | 324 | 281 | 380 | 377 | 515 | 573 |
| Kontaktierung nach 1-K Sprüh [min.] | 1 | 1 | (1) | 2 | 2 | 2 |
| Offene Zeit [min] | >10 | >10 | >10 | >10 | >10 | >10 |

Deutlich ist zu sehen, dass die erfindungsgemäßen Formulierungen vergleichbare Klebbarkeiten in Kombination mit deutlich niedrigerem Feststoff sowie Polychloroprengehalt aufweisen. Vorteile sind auch in der HCl Stabilität sowie im Restmonomergehalt offensichtlich.

**Tabelle 8: Einfluss der Verdünnung mit Dispercoll^{®} S 3030 Kieselsäure Suspensionen auf die Klebeigenschaften und Wärmeformbeständigkeit**

| **Zusammensetzung Formulierung [Teile]** | **20*** | **21** | **22** | **23** | **24** | **25** | **26** |
|---|---|---|---|---|---|---|---|
| Dispercoll^{®} C VP LS 2325 [55%] | 100 | 100 | 100 | 100 | 100 | 100 | 100 |
| Rhenofit^{®} DDA-50 EM [50%] | 2,0 | 2,0 | 2,0 | 2,0 | 2,0 | 2,0 | 2,0 |
| Dispercoll^{®} S 3030 [30 %] | | 50 | 60 | 70 | 80 | 90 | 100 |
| Glycinpulver [100%] | 6 | 10 | 10 | 10 | 10 | 10 | 10 |
| | | | | | | | |

| **Ergebnisse:** | | | | | | | |
|---|---|---|---|---|---|---|---|
| pH-Wert | 9,0 | 9,0 | 9,0 | 9,0 | 9,0 | 9,0 | 9,0 |
| Restmonomergehalt [ppm] | 34 | 18 | 15 | 14 | 11 | 10 | 9 |
| Feststoffgehalt Polychloropren [%] | 49 | 27 | 24 | 23 | 21 | 20 | 18 |
| Feststoffgehalt [%] | 57 | 45 | 44 | 42 | 42 | 41 | 40 |
| Viskosität [mPa*s] | 76 | 14 | 7 | 7 | 8 | 6 | <5 |
| HCL-Stabilität bei 50 µS [min.] | 818 | 642 | 598 | 562 | 576 | 607 | 704 |
| Kontaktierung nach 1-K Sprüh [min.] | Sofort | 1 | 1 | 1 | 1 | 2 | 3 |
| Offene Zeit [min] | >10 | >10 | >10 | >10 | >10 | >10 | >10 |

Tabelle 8 zeigt die hohe Füllbarkeit bzw. Verdünnbarkeit der erfindungsgemäßen Formulierungen mit Silica Suspensionen auf. Klebstoffeigenschaften fangen sich erst merklich bei > 100 Teile Silica Suspension an zu verschlechtern. Gleichzeitig kann so der Polymergehalt bis auf < 20% gesenkt werden, was einen ernormen ökonomischen und ökologischen Vorteil darstellt.

**Tabelle 9: Einfluss der Verdünnung mit Dispercoll^{®} S 5005 Kieselsäure Suspensionen auf die Klebeigenschaften und Wärmeformbeständigkeit**

| **Zusammensetzung Formulierung [Teile]** | **27** | **28** | **29** | **30** | **31** | **32** |
|---|---|---|---|---|---|---|
| Dispercoll^{®} C VP LS 2325 [55%] | 100 | 100 | 100 | 100 | 100 | 100 |
| Rhenofit^{®}DDA-50 EM [50%] | 2,0 | 2,0 | 2,0 | 2,0 | 2,0 | 2,0 |
| Dispercoll^{®} S 5005 [50%] | 50 | 60 | 70 | 80 | 90 | 100 |
| Glycinpulver [100%] | 10 | 10 | 10 | 10 | 10 | 10 |
| | | | | | | |

| **Ergebnisse:** | | | | | | |
|---|---|---|---|---|---|---|
| pH-Wert | 9,0 | 9,0 | 9,0 | 9,0 | 9,0 | 9,0 |
| Restmonomergehalt [ppm] | 22 | 20 | 19 | 17 | 16 | 15 |
| Feststoffgehalt Polychloropren [%] | 33 | 31 | 29 | 27 | 26 | 24 |
| Feststoffgehalt [%] | 55 | 55 | 54 | 54 | 54 | 54 |
| Viskosität [mPa*s] | 33 | 31 | 31 | 30 | 29 | 29 |
| HCL-Stabilität bei 50 µS [min.] | 442 | 425 | 402 | 434 | 376 | 422 |
| Kontaktierung nach 1-K Sprüh [min.] | 1 | 1 | (1) | 1 | 1 | (3) |
| Offene Zeit [min] | >10 | >10 | >10 | >10 | >10 | >10 |
| Wärmebeständigkeit °C | | | | 130 | | |

Analog zur Kieselsäure mit 30% Feststoffgehalt und Teilchendurchmesser < 10nm kann auch eine Kieselsäure mit 50% Feststoffgehalt und Teilchendurchmesser < 50nm erfindungsgemäß erfolgreich eingesetzt werden. Dabei wird wie manchmal gewünscht der Feststoffgehalt der Formulierung nicht verändert, jedoch der Feststoffgehalt der Polymerkomponente, ohne dass die Klebeigenschaften merklich verschlechtert würden, bis zu einem hohen Verdünnungssatz von ca. 100 %. Es wird eine herausragende Wärmebeständigkeit von > 130°C erhalten.

**Tabelle 10: Einfluss der Verdünnung mit Dispercoll^{®} S 5005 Kieselsäure Suspensionen auf die Klebeigenschaften und Wärmeformbeständigkeit**

| **Zusammensetzung Formulierung [Teile]** | **33*** | **34** | **35** | **36** | **37** | **38** | **39** |
|---|---|---|---|---|---|---|---|
| Dispercoll^{®} C 84 [55%] | 100 | 100 | 100 | 100 | 100 | 100 | 100 |
| Rhenofit^{®} DDA-50 EM [50%] | 2,0 | 2,0 | 2,0 | 2,0 | 2,0 | 2,0 | 2,0 |
| Dispercoll^{®} S 5005 [50%] | 0 | 50 | 60 | 70 | 80 | 90 | 100 |
| Glycinpulver [100%] | 4 | 10 | 10 | 10 | 10 | 10 | 10 |
| | | | | | | | |

| **Ergebnisse:** | | | | | | | |
|---|---|---|---|---|---|---|---|
| pH-Wert | 9,0 | 9,0 | 9,0 | 9,0 | 9,0 | 9,0 | 9,0 |
| Restmonomergehalt [ppm] | 43 | 34 | 29 | 29 | 26 | 24 | 24 |
| Feststoffgehalt Polychloropren [%] | 0,51 | 0,33 | 0,31 | 0,29 | 0,27 | 0,26 | 0,24 |
| Feststoffgehalt [%] | 0,58 | 0,55 | 0,55 | 0,54 | 0,54 | 0,53 | 0,53 |
| Viskosität [mPa*s] | 65 | 43 | 27 | 30 | 24 | 29 | 25 |
| HCL-Stabilität bei 50 µS [min.] | 436 | 311 | 274 | 268 | 284 | 241 | 230 |
| Kontaktierung nach 1-K Sprüh [min.] | Sofort | (Sofort) | 1 | 1 | 1 | 1 | 1 |
| Offene Zeit [min] | >10 | >10 | >10 | >10 | >10 | >10 | >10 |

In Analogie zum Einsatz von Dispercoll^{®} C 2325 werden bei Einsatz von Dispercoll^{®} C 84 und bei erfindungsgemäßer Verdünnung mit Kieselsäuresuspensionen hervorragende Klebeigenschaften erreicht.

**Tabelle 11: Vergleich erfindungsgemäß verdünnte und unverdünnte Polymerdispersionen, Vergleich mit marktüblichen Produkten.**

| **Zusammensetzung Formulierung [Teile]** | **40*** | **41*** | **42** | **43** | **44*** | **45*** | **46*** | **47*** |
|---|---|---|---|---|---|---|---|---|
| Dispercoll^{®} C 84 [55%] | 100 | | 100 | | | | | |
| Dispercoll^{®} C VP LS 2325 [55%] | | 100 | | 100 | | | | 100 |
| V1 | | | | | 100 | | | |
| V2 | | | | | | 100 | | |
| V3 | | | | | | | 100 | |
| VE Wasser | | | 145 | 145 | | | | |
| Rhenofit DDA-50 EM [50%] | 2,0 | 2,0 | 2,0 | 2,0 | | | | 2 |
| Glycinpulver [100%] | 4 | 6 | 4 | 6 | | | | 2,5 |
| ZnO Borcherts [25%] | | | | | | | | 1 |
| Plextol 4545 [50%] | | | | | | | | 25 |
| | | | | | | | | |

| **Ergebnisse:** | | | | | | | | |
|---|---|---|---|---|---|---|---|---|
| Viskosität [mPa*s] | 70 | 85 | 12 | 15 | 2000 | 470 | 1280 | 3660 |
| pH-Wert | 9,0 | 9,0 | 8,9 | 8,9 | 8,1 | 8,7 | 8,7 | 9,0 |
| Monomergehalt [ppm] | 36 | 32 | 20 | 17 | | | | 40 |
| Feststoffgehalt [%] | 58 | 58 | 33 | 33 | 52 | 52 | 54 | 54 |
| Feststoffgehalt Polychloropren [%] | 49 | 49 | 28 | 28 | >40 | >40 | >40 | 40 |
| ZnO Gehalt [% auf Formulierung] | 0 | 0 | 0 | 0 | | | | 0,5 |
| HCL-Stabilität bei 50 µS [min.] | 436 | 818 | 302 | 216 | 37 | 62 | 445 | 548 |
| Kontaktierung nach 1-K Sprüh [min.] | sofort | sofort | sofort | 1 | sofort | (2) | sofort | sofort |
| Offene Zeit [min] | >10 | >10 | >10 | >10 | >10 | >10 | >10 | >10 |
| Wärmebeständigkeit °C | 90 | 90 | | | 70 | 110 | 70 | 90 |

Es ist erkennbar, dass die erfindungsgemäßen Formulierungen trotz starker Verdünnung bei den erfindungsgemäßen Eigenschaften vergleichbare Klebbarkeiten wie marktübliche Formulierungen erzeugen. Darüber hinaus zeichnen Sie sich durch hervorragende Lagerungs- und HCl-Beständigkeit sowie durch extrem niedrige Viskositäten aus.

Die nicht erfindungsgemäßen Vergleichsbeispiele zeigen zum Teil sehr niedrige Wärmeformbeständigkeiten im Vergleich zum erfindungsgemäßen Beispiel 30.

### Bestimmung der rheologischen Eigenschaften

Die Proben wurden mit einem MCR101-Rheometer der Firma AntonPaar untersucht.

Es wurde das Becher/Rotor-System DG 26.7 mit der Peltierheizung C-PTD200 eingesetzt.

Messprofil:
Abschnitt 1: Rampe Log. von D = 0,1-1000 [1/s] bei T = 23°C
Abschnitt 1: Rampe Log. von D = 1000 - 0,1 [1/s] bei T = 23°C

### Ergebnisse

**Tabelle 12: Viskosität in Abhängigkeit von der Scherrate**

| Beispiele aus Tabelle 7 , 11 | | | |
|---|---|---|---|
| Beispiel | Viskosität [Pa*s] Scherrate [10/s] | Viskosität [Pa*s] Scherrate [1000/s] | Verhältnis |
| 14* | 0,1 | 0,0279 | 3,6 |
| 15 | 0,0029 | 0,0029 | 1 |
| 16 | 0,0065 | 0,0048 | 1,4 |
| 17 | 0,0028 | 0,0026 | 1,1 |
| 44* | 0,569 | 0,0566 | 10 |
| 45* | 0,297 | 0,0332 | 9 |

Eine erfindungsgemäße Formulierung liegt vor bei annähernd Newtonschen Scherverhalten hier definiert als eine Änderung der Viskosität mit der Scherrate von 10/s - 1000/s von maximal 3.

### Scherstabilitätsuntersuchungen

Der Versuch wurde mit einem PHYSICA MC 200 Rheometer mit dem Messsystem Z3.1 (Spalt: 240 µm) bei 25°C durchgeführt. Es wurde eine logarithmische Schergeschwindigkeitsrampe von 0 bis 15000 s⁻¹ in 240 s durchlaufen.

Zur sofortigen Feststellung von Koagulatbildungen bei einer bestimmten Schergeschwindigkeit wurde ein sehr kurzes Messintervall von 0,1 s eingestellt, bei einem Anstieg von delta 1000 Pa zwischen zwei Messpunkten wird die Messung automatisch abgebrochen. Sofern sich bei einer Probe noch keine Koagulatbildung zeigte, wurde bei der maximalen Schergeschwindigkeit von 15000 s⁻¹ über einen Zeitraum von 600s mit einem Messtakt von 1 s weitergeschert.

**Tabelle 13: Scherraten**

| Probe | Scherrate bis 15000 1/s erreicht | Laufzeit nach Erreichen der Scherrate 15000 1/s [Min.] |
|---|---|---|
| 44* | ja | 5.5 |
| 45* | Abbruch bei 11400 s⁻¹ | - |
| 7 | ja | 10 |
| 47* | Abbruch bei 261 s⁻¹ | - |
| 46* | ja | 10 |

Drei der vier Vergleichsbeispiele von marktüblichen Produkten, zeigen eine deutliche Scherinstabilität abzulesen an der aufsteigenden Viskosität (Koagulation) bei Erreichen einer Scherrate von ca. 260 1/s beziehungsweise 11400 1/s oder eine vorzeitige Koagulation vor Ende der Messzeit bei höchster Scherrate. Nur das erfindungsgemäße Beispiel 7 und das Vergleichsbeispiel 46* zeigen keine Koagulation, wobei das Vergleichsbeispiel 46* im Verlauf der Messung deutlich an Viskosität verliert, somit seine rheologischen Eigenschaften stark ändert.

### Sprühversuche mit der Wagner Sprühpistole bei Drücken << 0,5 bar siehe Betriebsanweisung Wagner W550.

Es sollen handelsübliche 1-K Sprühklebstoffformulierungen und erfindungsgemäße Formulierungen mit dem handelsüblichen Auftragssystem der Fa. Wagner ausgetestet werden.

Untersucht wurden die Vergleichsbeispiele 44*,45*,46*,47* und das erfindungsgemäße Beispiel 15.

Während das erfindungsgemäße Beispiel 15 problemlos sprühbar ist und die von den Standard-Mitteldrucksystemen gewohnten (siehe Tabelle 7) Klebbeigenschaften nach Auftrag auf PU Schaum aufweist, lassen sich die Vergleichsbeispiele 44*,46* und 47* aufgrund der hohen Viskositäten nicht versprühen und Vergleichsbeispiel 45* verstopft nach kurzer Zeit die Düse des Sprühapplikators.

### Wiederverklebung.

Die erfindungsgemäß einsetzbaren Produkte zeigen nach Abtrocknen aufgrund ihrer dünnen Auftragsschichten eine hervorragende Wiederverklebbarkeit nach erneuter Klebstoffauftragung. Dazu wurde das erfindungsgemäße Beispiel 15 mittels Sprühauftrag auf PU Schaum appliziert, über 2h abgetrocknet, sowie erneut auf das gleiche Prüfteil appliziert. Es wurde eine erfolgreiche Kontaktierung nach <1 Minute erreicht.

### Tieftemperaturbeständigkeit:

Das erfindungsgemäße Beispiel 42 wurden nach Abkühlung auf 0°C mittel eines Eisbades wie allgemein unter 7 beschrieben auf PU Schaum sprühappliziert. Ein Kontaktierung konnte nach < 2 Minuten Wartezeit erreicht werden, die Viskosität stieg um 2 mPas, während die Viskosität bei den nicht erfindungsgemäßen Vergleichsbeispielen 44* um 910 mPas, 45* um 176 mPas, 46* um 310 mPas und 47* um 1730 mPas stieg. Bei diesen erheblichen Anstiegen in der Viskosität ist die Nutzbarkeit in einer Sprühapplikation unter fixon Prozesseinstellungen nicht mehr gewährleistet.

Desweiteren konnte bei dem erfindungsgemäßen Beispiel 7 ein vollständiger Erhalt der Scherbeständigkeit bei Scherung bei 0°C festgestellt werden im Vergleich zur den nicht erfindungsgemäßen Beispielen 44*, 46*, 47*, wie in Tabelle 14 analog zur Versuchsreihe von Tabelle 13 allerdings bei 0°C gemessen, beschrieben wird, welche deutliche Einbußen in der Scherstabilität verzeichnen. Der Erhalt der Scherstabilität ist wichtig, damit bei tiefen Temperaturen bei der Sprühapplikation keine vorzeitige Koagulation im Spritzkopf erfolgt, was zusätzliche Reinigungszyklen und damit erheblichen Produktivitätsverlust bedingt.

**Tabelle 14:**

| Probe | Scherrate bis 15000 1/s erreicht | Laufzeit nach Erreichen der Scherrate 15000 1/s [Min.] |
|---|---|---|
| 44* | ja | 3.5 |
| 7 | ja | 10 |
| 47* | nein | - |
| 46* | ja | 1,5 |

### Lagerstabilität:

Die erfindungsgemäßen Beispiele zeichnen sich durch eine hervorragende Lagerstabilität aus. Auch nach Lagerung von bis zu 10 Tagen bei 70°C, wurden im Vergleich zu Standardlatices und handelsüblichen Klebstoffformulierungen nur geringfügige Veränderungen im pH von < 1 Einheit, Änderungen der Viskosität < 20 mPas bei Erhalt der Funktion in der Sprühverklebung von Schaumstoffen beobachtet, siehe Tabelle 15.

Zur Ausprüfung der Lagerstabilität werden jeweils 10 Glasflaschen a'100mL mit der erfindungsgemäßen Formulierung 7 sowie als Vergleich Dispercoll C84-(55%) Latex und auf 28% verdünnten Dispercoll C84 Latex möglichst randvoll befüllt, um eventuelle Hautbildung in den Flaschen zu minimieren. Die Proben werden im Anschluß im Trockenschrank bei 70°C gelagert, täglich wird eine Probe entnommen und auf Auscheidungen, pH, Viskosität sowie auf den Erhalt der Eignung für Sprühapplikation zur Verklebung von Schaumstoffen wie in Prüfverfahren 7 beschrieben untersucht.

**Tabelle 15 Alterung im Trockenschrank bei 70°C,**

| | Alterung bei 70°C im Trockenschrank [Tage] | | |
|---|---|---|---|
| | 0 | 1 | 10 |
| **Dispercoll C 84 (55 %)** | | | |
| pH-Wert | 12,0 | 9,8 | 9,7 |
| Viskosität [mPa*s] | 115 | 78 | 50 |
| Bodensatz Anbackung | Nein | Ja | Ja |

| **Dispercoll C 84 verdünnt (28 %)** | | | |
|---|---|---|---|
| pH-Wert | 11,9 | 9,6 | 9,0 |
| Viskosität [mPa*s] | 3 | 4 | 11 |
| Bodensatz Anbackung | Nein | Nein | Nein |

| **Erfindungsgemäßes Beispiel 7** | | | |
|---|---|---|---|
| pH-Wert | 8,9 | 8,79 | 8,44 |
| Viskosität [mPa*s] | 11 | 10 | 8 |
| Bodensatz Anbackung | Nein | Nein | Nein |

**Kontaktierbarkeit an PU-Schaum [min.]**

| Beispiel 7 | sofort | 1 | 3 | 5 | 10 |
|---|---|---|---|---|---|
| 0d 70°C | + | + | + | + | + |
| 10d 70°C | -- | + | + | + | + |

| | | | | | |
|---|---|---|---|---|---|
| Erläuterung: -- komplett auf + komplett zu (+) leicht geöffnet | | | | | |

### Beispiel D, alternatives Herstellverfahren:

Abweichend vom in Beispiel C beschriebenen Batch-Verfahren kann die Herstellung der Erfindungsgemäßen Beispiele alternativ durch gleichzeitige Zusammenführung der Komponenten mittels eines Statikmischers oder dynamischen Mischers erfolgen. Im Bedarfsfall können abweichend von der gleichzeitigen Zusammenführung innerhalb des Statikmischers / oder dynamischen Mischers einzelne Komponenten durch Zuströmöffnungen geringfügig zeitversetzt eingemischt werden. Am Ende des Statikmischers / dynamischen Mischers tritt fertiges Produkt aus. Die Mischungszeiten liegen dabei < 1 Stunde. Die erhaltenen Produkte unterscheiden sich nicht von denen durch Batchfahrweise hergestellten erfindungsgemäßen Produkten.

Vorteilhaft ist der Einsatz des beschriebenen Mischverfahrens für die erfindungsgemäßen Beispiele, weil diese sich durch eine hervorragende Scherstabilität und Lagerstabilität auszeichnen und auf diese Weise keine Batch - Mischaggregate vorgehalten werden müssen, sondern die Herstellung direkt aus den Liefergebinden mittels Dosierpumpen erfolgen kann. Dieser Zusammenhang ist für die nichterfindungsgemäßen Beispiele nicht zwingend gegeben aufgrund z.T. deutlich geringerer Scherstabilitäten und höherer Viskositäten.

## Patentansprüche

1. Verfahren zur Herstellung einer Nass-in-Nass Verklebung von Schaumstoffen, **dadurch gekennzeichnet, dass** eine Klebstoffzusammensetzung enthaltend eine wässrige Polymerdispersion mittels Sprühauftrag, Pinsel- oder Walzenauftrag auf ein Substrat appliziert wird und nach einer Ablüftungszeit von < 5min eine Nassklebung vor Filmbildung erzeugt wird, wobei die wässrige Polymerdispersion eine Konzentration an Polychloropren von ≤ 40 Gew. % und einen Restmonomergehalt < 50 ppm enthält, eine Viskosität von < 50 mPas, gemessen mittels Brookfield-Rheometer bei 60 Umdrehungen pro Sekunde mit Spindel 2, einen pH-Wert von 8 bis 10 und eine pH-Stabilität gemessen in Anlehnung an DIN 53381, Methode B von > 2h aufweist und die Scherspannung weitgehend proportional zur Schergeschwindigkeit ist.

2. Verfahren gemäß Anspruch 1, **dadurch kennzeichnet, dass** die Scherspannung der wässrigen Polymerdispersion weitgehend proportional zur Schergeschwindigkeit ist und die Viskosität sich über den Bereich von 10-1000 /s um den Faktor ≤ 3 ändert.

3. Verfahren gemäß Anspruch 1, **dadurch kennzeichnet, dass** die wässrige Polymerdispersion eine Gesamtemulgatorkonzentration von < 1,5 Gew.-% aufweist.

4. Verfahren gemäß Anspruch 1, **dadurch kennzeichnet, dass** die wässrige Polymerdispersion 0,1-5 Gew.-Teile Alterungs/Oxidationsstabilisatoren, bezogen auf Feststoffkonzentration von Polychloropren, die auf = 100 Teile gesetzt verstanden wird, enthält.

5. Verfahren gemäß Anspruch 1, **dadurch kennzeichnet, dass** die wässrige Polymerdispersion eine Zn-Konzentration von < 0,24 Gew.- % aufweist.

6. Verfahren gemäß Anspruch 1, **dadurch kennzeichnet, dass** die wässrige Polymerdispersion 40 - 100 Gew.-Teile von Kieselsäure/Wasserglas als Suspension diskreter Teilchen in Wasser enthält, wobei der Feststoffanteil der Kieselsäure Suspension zur Teileberechnung herangezogen wird und der Polychloropren Feststoffanteil eines Polychloroprenlatex = 100 Teile gesetzt wird.

7. Verfahren gemäß Anspruch 6, **dadurch kennzeichnet, dass** die Kieselsäure wässrige Siliciumdioxid-Dispersionen sind, deren SiO₂-Partikel eine Primärpartikelgröße von 1 bis 400 nm, bevorzugt 5 bis 100 nm und besonders bevorzugt 8 bis 50 nm aufweisen.

8. Verfahren gemäß Anspruch 1, **dadurch gekennzeichnet, dass** zur Herstellung der wässrigen Polymerdispersion zunächst eine kontinuierliche oder diskontinuierliche (co)Polymerisation von Chloropren in wässriger Emulsion, ohne oder unter Zusatz einer definierten Menge eines Reglers, stattfindet, anschließend die restlichen Monomeren zu einem Wert von < 50 ppm entfernt werden, gegebenenfalls nachfolgend mit Wasser verdünnt wird und schließlich gegebenenfalls eine Temperierungslagerung und/oder Aufkonzentration und gegebenenfalls nachfolgende Verdünnung mit Wasser erfolgt.

9. Verfahren gemäß Anspruch 8, **dadurch gekennzeichnet, dass** die Polymerisation von Chloropren mit 0 - 20 Gew.-Teilen, bezogen auf 100 Gew.-Teile Chloropren, copolymerisierbaren ethylenisch ungesättigten Monomeren in Gegenwart von 0 - 1 mmol eines Reglers, bezogen auf 100 g Monomer, bei Temperaturen von 0 - 70°C, in wässriger Emulsion durchgeführt wird, wobei die Dispersion einen in organischen Lösemitteln unlöslichen Anteil von 0,1 - 90 Gew.-%, bezogen auf das Polymere, hat.

## Claims

1. Method of producing a wet-on-wet adhesive bond of foam materials, **characterized in that** an adhesive composition comprising an aqueous polymer dispersion is applied by spray application, brush application or roller application to a substrate and, after a flushing time of < 5 min, a wet bond is produced prior to film formation, wherein the aqueous polymer dispersion comprises a polychloroprene concentration of ≤ 40% by weight and a residual monomer content < 50 ppm, has a viscosity of < 50 mPas, measured by means of a Brookfield Rheometer at 60 revolutions per second with spindle 2, a pH of 8 to 10 and a pH stability, measured in accordance with DIN 53381, Method B, of > 2 h, and the shear stress is largely proportional to the shear rate.

2. Method according to Claim 1, **characterized in that** the shear stress of the aqueous polymer dispersion is largely proportional to the shear rate and the viscosity changes by a factor of ≤ 3 over the range of 10-1000/s.

3. Method according to Claim 1, **characterized in that** the aqueous polymer dispersion has a total emulsifier concentration of < 1.5% by weight.

4. Method according to Claim 1, **characterized in that** the aqueous polymer dispersion comprises 0.1-5 parts by weight of aging/oxidation stabilizers, based on solids concentration of polychloroprene, which is understood as set at = 100 parts.

5. Method according to Claim 1, **characterized in that** the aqueous polymer dispersion has a Zn concentration of < 0.24% by weight.

6. Method according to Claim 1, **characterized in that** the aqueous polymer dispersion comprises 40 - 100 parts by weight of silica/waterglass as a suspension of discrete particles in water, the solids fraction of the silica suspension being employed for the parts calculation, and the polychloroprene solids fraction of a polychloroprene latex being set = 100 parts.

7. Method according to Claim 6, **characterized in that** the silica comprises aqueous silicon dioxide dispersions whose SiO₂ particles have a primary particle size of 1 to 400 nm, preferably 5 to 100 nm, and more preferably 8 to 50 nm.

8. Method according to Claim 1, **characterized in that**, for preparing the aqueous polymer dispersion, first a continuous or discontinuous (co)polymerization of chloroprene takes place in aqueous emulsion, with or without addition of a defined amount of a regulator, after which the residual monomers are removed to a level of < 50 ppm, followed optionally by dilution with water and finally, optionally, by thermal conditioning storage and/or by concentration and optionally subsequent dilution with water.

9. Method according to Claim 8, **characterized in that** the polymerization of chloroprene is carried out with 0 - 20 parts by weight, based on 100 parts by weight of chloroprene, of copolymerizable ethylenically unsaturated monomers in the presence of 0 - 1 mmol of a regulator, based on 100 g of monomer, at temperatures of 0 - 70°C, in aqueous emulsion, the dispersion having a fraction insoluble in organic solvents of 0.1% - 90% by weight, based on the polymer.

## Revendications

1. Procédé pour la réalisation d'un collage humide-sur-humide de mousses, **caractérisé en ce qu'**une composition adhésive contenant une dispersion polymère aqueuse est appliquée, par application par pulvérisation, par pinceau ou par cylindre, sur un substrat et un collage humide avant formation de film est produit après un temps d'aération < 5 min, la dispersion polymère aqueuse contenant une concentration en polychloroprène ≤ 40% en poids et une teneur résiduelle en monomères < 50 ppm, présentant une viscosité < 50 mPa.s, mesurée à l'aide d'un rhéomètre de Brookfield à 60 tours par seconde équipé d'un mobile 2, un pH de 8 à 10 et une stabilité de pH, mesurée par référence à la norme DIN 53381 procédé B, > 2 h et la contrainte de cisaillement étant largement proportionnelle à la vitesse de cisaillement.

2. Procédé selon la revendication 1, **caractérisé en ce que** la contrainte de cisaillement de la dispersion polymère aqueuse est largement proportionnelle à la vitesse de cisaillement et la viscosité se modifie sur la plage de 10-1000/s d'un facteur ≤ 3.

3. Procédé selon la revendication 1, **caractérisé en ce que** la dispersion polymère aqueuse présente une concentration totale en émulsifiant < 1,5% en poids.

4. Procédé selon la revendication 1, **caractérisé en ce que** la dispersion polymère aqueuse contient 0,1-5 parties en poids de stabilisants du vieillissement/de l'oxydation, par rapport à la concentration en solides de polychloroprène qui vaut 100 parties.

5. Procédé selon la revendication 1, **caractérisé en ce que** la dispersion polymère aqueuse présente une concentration en Zn < 0,24% en poids.

6. Procédé selon la revendication 1, **caractérisé en ce que** la dispersion polymère aqueuse contient 40-100 parties en poids de silice/verre soluble sous forme de suspensions de particules discrètes dans de l'eau, la proportion de solides de la suspension de silice étant utilisée pour le calcul des particules et la proportion de solides de polychloroprène d'un latex de polychloroprène valant 100 parties.

7. Procédé selon la revendication 6, **caractérisé en ce que** la silice est constituée par des dispersions aqueuses de dioxyde de silicium, dont les particules de SiO₂ présentent une grosseur de particule primaire de 1 à 400 nm, de préférence de 5 à 100 nm et de manière particulièrement préférée de 8 à 50 nm.

8. Procédé selon la revendication 1, **caractérisé en ce que**, pour la préparation de la dispersion polymère aqueuse, on réalise d'abord une (co)polymérisation continue ou discontinue de chloroprène dans une émulsion aqueuse, sans ou avec addition d'une quantité définie d'un régulateur, on élimine ensuite les monomères résiduels jusqu'à une valeur < 50 ppm, le cas échéant, on dilue ensuite avec de l'eau et on réalise enfin, le cas échéant, un entreposage d'équilibrage thermique et/ou une concentration et le cas échéant une dilution consécutive à l'eau.

9. Procédé selon la revendication 8, **caractérisé en ce que** la polymérisation du chloroprène est réalisée avec 0-20 parties en poids, par rapport à 100 parties en poids de chloroprène, de monomères éthyléniquement insaturés copolymérisables en présence de 0-1 mmole d'un régulateur, par rapport à 100 g de monomère, à des températures de 0-70°C, en émulsion aqueuse, la dispersion présentant une proportion insoluble dans des solvants organiques de 0,1-90% en poids par rapport au polymère.
